Europäisches Patentamt

European Patent Office

Office européen des brevets

(19)

(11) **EP 1 172 980 B1**

(12) **FASCICULE DE BREVET EUROPEEN**

(45) Date de publication et mention
de la délivrance du brevet:
**29.12.2004 Bulletin 2004/53**

(51) Int Cl.$^7$: **H04L 27/00**

(21) Numéro de dépôt: **01401730.5**

(22) Date de dépôt: **28.06.2001**

(54) **Dispositif pour la classification de signaux complexes contenant une modulation numérique linéaire**

Vorrichtung zur Klassifikation von komplexen Signalen mit linearer digitaler Modulation

Apparatus for classification of complex signals with a linear digital modulation

(84) Etats contractants désignés:
**AT BE CH CY DE DK ES FI FR GB GR IE IT LI LU MC NL PT SE TR**

(30) Priorité: **12.07.2000 FR 0009131**

(43) Date de publication de la demande:
**16.01.2002 Bulletin 2002/03**

(73) Titulaire: **Thales**
**92200 Neuilly Sur Seine (FR)**

(72) Inventeurs:
• **Delabbaye, Jean-Yves**
**78125 Vieille-Eglise-en-Yvelines (FR)**
• **Couderette, André**
**78180 Montigny-le-Bretonneux (FR)**

(74) Mandataire: **Plaçais, Jean-Yves**
**Cabinet Netter,**
**36, avenue Hoche**
**75008 Paris (FR)**

(56) Documents cités:
• **MARINOVICH N M ET AL: "CLASSIFICATION OF DIGITAL MODULATION TYPES" PROCEEDINGS OF THE SPIE, 10 juillet 1995 (1995-07-10), XP000199840**
• **HO K C ET AL: "MODULATION IDENTIFICATION BY THE WAVELET TRANSFORM" MILCOM CONFERENCE RECORD,XX,XX, vol. 2, 6 novembre 1995 (1995-11-06), pages 886-890, XP000577556**
• **NAGY P A J: "MODULATION CLASSIFICATION - AN UNIFIED VIEW" SIGNAL PROCESSING: THEORIES AND APPLICATIONS, PROCEEDINGS OF EUSIPCO,XX,XX, vol. 2, 1996, pages 831-834, XP000749228**

**Description**

L'invention concerne l'analyse de signaux électromagnétiques a priori inconnus.

De façon générale, on sait convertir un signal électromagnétique reçu ("signal réel") en un signal complexe, représentatif en amplitude et phase du signal électromagnétique reçu. Ceci se fait en pratique après avoir réduit la fréquence, pour descendre généralement jusqu'en bande de base. Le signal complexe possède deux composantes, l'une en phase et l'autre en quadrature, à la manière des nombres complexes, d'où son nom.

Parmi les techniques actuellement disponibles pour l'analyse de signaux inconnus, on connaît le document "Classification of Digital Modulation Types", Proceedings Of The Spie, 10 juillet 1995, XP000199840, de Marinovich et autres, le document "Modulation Identification By The Wavelet Transform", Milcom Conference Record, vol.2, 6 novembre 1995, pages 886-890, XP000577556, de HO K C et autres, et le document "Modulation Classification-An Unified View", Signal Processing : Theories And Applications, Proceedings Of Eusipco, vol.2, 1996, pages 831-834, XP000749228, de NAGY P A J.

Les techniques actuellement connues peuvent consister à rechercher dans le signal reçu des attributs invariants, par translation de fréquence ou de niveau, notamment. Elles peuvent faire intervenir une transformation de Fourier, ou bien une transformation de type "ondelettes", ou encore une transformation de WIGNER-VILLE, par exemple.

Bien que l'état de la technique soit difficile à percevoir exactement en la matière, la Demanderesse considère actuellement comme connu de rechercher une estimée de la moyenne de la "fréquence instantanée", et d'effectuer une démodulation du signal par cette fréquence. Cela pourra être utilisé dans la mise en oeuvre de l'invention.

La Demanderesse s'est posé le problème d'obtenir des moyens qui aident à trouver le message contenu dans un signal, ou même permettent de trouver complètement ce message, lorsqu'on ne sait rien sur la modulation exacte et l'alphabet de symboles utilisés à l'émission, quand, par exemple, la modulation est numérique.

Elle s'est intéressée à certains types généraux de modulation, en particulier à la modulation numérique linéaire, pourlesquels elle a trouvé des solutions, qui sont les éléments constitutifs de la présente invention.

L'invention porte donc, notamment, sur un dispositif d'aide à l'analyse de signaux contenant une modulation numérique linéaire par des symboles. Le dispositif comprend:

- une mémoire de signal, pour stocker un signal numérique complexe, représentatif en amplitude et phase d'un signal capté, sur une durée choisie, et
- des moyens de traitement, agencés pour rechercher dans le signal complexe des propriétés relatives à sa fréquence porteuse et à la modulation de celle-ci, en particulier en fonction d'un modèle de modulation choisi, les moyens de traitement comprennant des moyens pour déterminer une estimée du rythme de la modulation.

Avantageusement, les moyens de traitement comprennent en outre :

- des moyens propres à déterminer une estimée approchée $f_a$ de la porteuse $f_o$ du signal complexe, et à démoduler le signal complexe par cette estimée approchée de la porteuse,
- des moyens de projection, propres à calculer les composantes du signal complexe, après sa démodulation par l'estimée approchée de la porteuse, dans une base de fonctions, la base de fonctions étant paramétrée selon le rythme de la modulation, et
- des moyens de calcul d'une estimée de la forme d'impulsion élémentaire du signal complexe, opérant sur les composantes du signal complexe pour calculer une estimée de la forme d'impulsion élémentaire modulée sous la forme d'une forme d'impulsion de support minimal, et d'un résidu de filtrage, la forme d'impulsion de support minimal étant associée à un train de symboles,
- des moyens de calcul d'une estimée de la suite des symboles du signal complexe propres à engendrer un filtrage inverse du résidu de filtrage, puis à appliquer ce filtrage inverse au train de symboles associé à la forme d'impulsion de support minimal, ce qui fournit un ensemble de trains de symboles modulés.

Exprimée ci-dessus en termes de dispositif, l'invention peut aussi être définie sous la forme de procédés.

D'autres caractéristiques et avantages de l'invention apparaîtront à l'examen de la description détaillée qui va suivre, ainsi que des dessins annexés, sur lesquels :

- la figure 1 illustre schématiquement, sous forme de diagramme-blocs, le principe du passage en signal complexe (100);

- la figure 1A illustre schématiquement un premier mode de réalisation permettant de mettre en oeuvre le principe du passage en signal complexe de la figure 1;

- la figure 1B illustre schématiquement un second mode de réalisation permettant de mettre en oeuvre le principe du passage en signal complexe de la figure 1;

- la figure 2A illustre un exemple de fonction de modulation élémentaire sous la forme d'une impulsion en "racine de cosinus surélevé", en fonction du temps exprimé en périodes T;

- la figure 2B illustre une superposition de signaux a(k)g(t-kT) (ou symboles) émis successivement, en fonction du temps exprimé en périodes T;

- la figure 2C illustre la résultante des signaux de la figure 2B;

- la figure 2D illustre une répartition de symboles (ou constellation) dans le plan complexe, dite "alphabet";

- la figure 3 illustre les principales étapes (ou stades) de traitement du procédé selon l'invention;

- les figures 4A à 4D illustrent respectivement une réponse impulsionnelle d'un filtre passe-bas réel classique, une fonction de transfert du filtre de la figure 4A, un spectre de signal d'entrée, et le spectre du signal complexe du filtre ayant la fonction de transfert de la figure 4B;

- les figures 5A à 5D illustrent respectivement le spectre d'un signal obtenu à partir d'une FFT, un filtrage non linéaire de la sortie de la FFT de la figure 5A, un exemple de traitement des raies de la figure 5B, et un exemple d'estimation de la raie en + 1/T de la figure 5C;

- la figure 6 illustre sous forme d'étape un exemple de traitement permettant d'obtenir la valeur 1/T de la raie isolée de la figure 5D;

- les figures 7A à 7D illustrent respectivement un exemple de signal défini par un nuage de points dans le plan complexe, le spectre du signal complexe de la figure 7A, le spectre du signal complexe de la figure 7B après démodulation, et la densité spectrale du signal de la figure 7A avant et après démodulation;

- les figures 8A et 8B illustrent respectivement les projections de $h_m$ et du signal dans une base de fonctions choisie;

- la figure 8C illustre une approximation des fonctions $g_m(t)$ dans la base de fonctions choisie aux figures 8A et 8B;

- la figure 9 illustre sous forme d'étapes un exemple du déroulement des traitements visant à estimer $h_m(t)$;

- les figures 10A à 10C illustrent respectivement le spectre de la fonction de transfert du filtre de réponse impulsionnelle pour un signal centré du type de celui de la figure 7C et pour un premier type de base, le spectre de la fonction de transfert de fonctions $\varphi$ en cosinus surélevés, et le spectre de la fonction de transfert du filtre de réponse impulsionnelle correspondant à la figure 10B;

- la figure 11 illustre l'approximation de $h_m(t)$ par sa projection $h_{pm}(t)$ dans la base de fonctions de la figure 10C;

- la figure 12 illustre la répartition des valeurs propres de la matrice $M_{L1}$, rangées par ordre décroissant de grandeur en abscisse, lorsque la projection correspond à un filtrage suivi d'un échantillonnage à q = 2 points par symboles;

- la figure 13 illustre la répartition des valeurs propres de la matrice $M_{L1}$, rangées par ordre décroissant de grandeur en abscisse, lorsque la projection correspond à un filtrage suivi d'un échantillonnage à q > 2 points par symboles;

- les figures 14A à 14C illustrent respectivement, en fonction du temps exprimé en périodes T, la fonction $h_{pm}(t)$, le résidu de filtrage, et la fonction élémentaire de modulation modulée $g_{pm}(t)$;

- la figure 15 illustre sous forme d'étapes un exemple du déroulement des traitements visant à estimer les symboles $a_m(k)$ à partir des trains de symboles possibles;

- la figure 16 illustre un exemple de dispersion du fait du bruit des symboles a(k), dans le plan complexe et pour une plage de fréquence (résidu de fréquence) bien centrée;

- la figure 17 illustre un second exemple de dispersion du fait du bruit des symboles a(k), dans le plan complexe et pour une plage de fréquence mal centrée;

- la figure 18 est une représentation tri-dimensionnelle de la densité de probabilité des symboles a(k) de la figure 16;

- la figure 19 est une représentation tri-dimensionnelle de la densité de probabilité des symboles a(k) de la figure 17;

- la figure 20 illustre sous forme d'étapes un exemple du déroulement des traitements visant à estimer la position des états possibles; et

- la figure 21 illustre sous forme d'étapes un exemple du déroulement des traitements visant à estimer la suite des symboles effectivement émise, à partir du train de symboles bruités a(k) et des états possibles des symboles $e_i$ calculés en référence à la figure 20.

Les dessins annexés sont, pour l'essentiel, de caractère certain. En conséquence, ils pourront non seulement servir à mieux faire comprendre la description, mais aussi contribuer à la définition de l'invention, le cas échéant.

Les expressions mathématiques élaborées, ou qui interviennent répétitivement, sont regroupées dans une annexe qui fait partie de la description. Elles sont désignées par la lettre E, suivie d'un nombre de référence.

Dans ces expressions, le vecteur unitaire des imaginaires complexes est classiquement noté j, avec $j^2 = -1$. Par ailleurs, le symbole "i", mis en indice ou comme variable de sommation, est utilisé à plusieurs reprises, avec des significations différentes; en effet, le nombre important de relations invoquées ne permet pas d'utiliser systématiquement une lettre différente à chaque fois, et le contexte lève en principe toute ambiguïté. De même, les ensembles des valeurs prises par les variables i, k, t,... ne sont pas généralement explicités, sauf lorsque que cela s'avère nécessaire. Ces ensembles se déduisent du contexte en prenant toutes les valeurs possibles sur la totalité de la durée du signal analysé. Les expressions des valeurs minimales et maximales en fonction des inconnues des modèles ne présente pas d'intérêt pratique dans l'algorithme. En outre, le symbole * en exposant indique le conjugué d'un nombre complexe; s'il s'agit d'une matrice, il indique sa transposée conjuguée. Enfin, deux caractères adjacents peuvent indiquer un produit, si le contexte indique qu'ils relèvent de deux variables différentes : par exemple, le produit de 2 par L1 est noté 2L1 ou 2.L1.

Les mots "estimer" et "estimation" visent l'évaluation d'une grandeur inconnue, sans aucun a priori sur la précision de cette évaluation.

Enfin, pour alléger l'écriture et la description, le bruit n'est pas pris en compte dans les expressions mathématiques données ci-après.

L'invention concerne l'analyse de signaux de communication. Dans ce domaine, on part d'un signal de communication capté, dont on s'efforce de déterminer le contenu informatif brut (c'est-à-dire indépendamment d'un éventuel chiffrement). On suppose que le signal capté a été enregistré, et qu'il est analysé en temps différé.

Selon l'ouvrage "Digital Communications", John G. PROAKIS, (Chapitre "Representation of digitally modulated signals", p. 163, seconde édition, Mc Graw Hill Book Company), un signal correspondant à une modulation numérique linéaire se modélise de la manière indiquée dans la relation E1 (voir l'annexe où sont regroupées la plupart des formules), relation dans laquelle :

- les a(k) (k entier positif) sont les symboles d'information transmis, qui ne peuvent prendre qu'un nombre fini de valeurs possibles, ou états,
- g(t) est la fonction de modulation élémentaire (ou "forme d'impulsion élémentaire"), appliquée à chaque symbole,
- 1/T est le rythme d'émission des symboles, et
- $f_0$ est la fréquence porteuse utilisée.

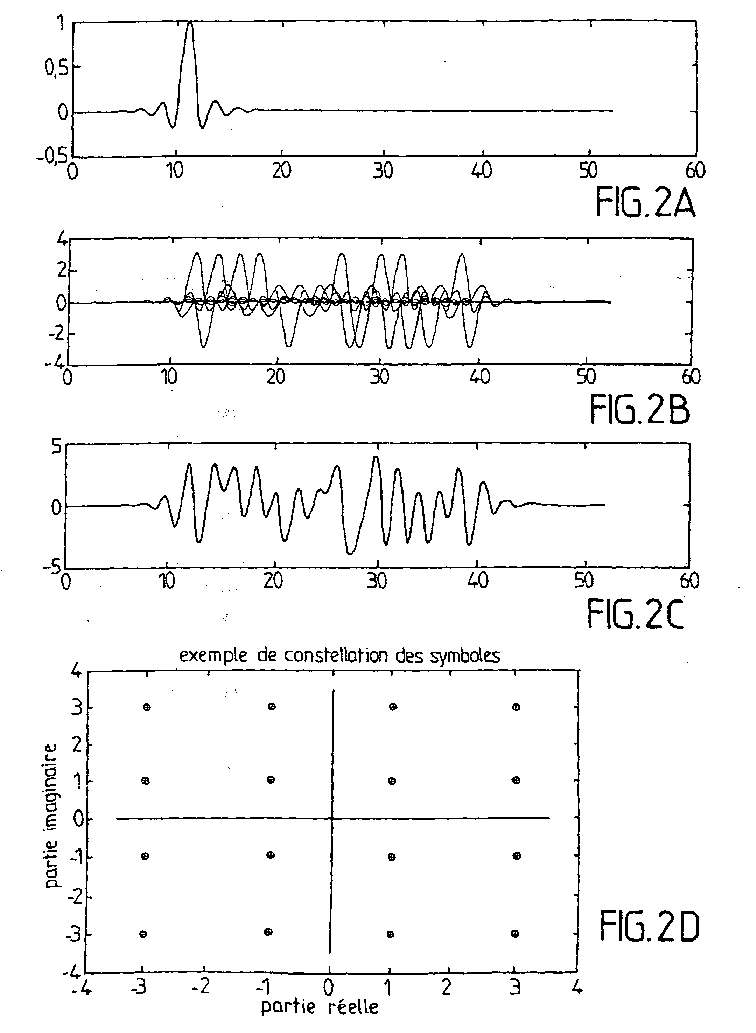

La fonction de modulation élémentaire (c'est-à-dire appliquée pour chaque symbole) est par exemple une forme d'impulsion en "racine de cosinus surélevé" (Fig. 2A). Une telle forme d'onde est décrite par exemple dans l'ouvrage précité de Proakis, page 536. Le plus souvent, les fonctions de modulation élémentaire rencontrées en pratique, ont, comme dans l'exemple ci-dessus, des longueurs plus grandes que T. Il en découle que les différents signaux a(k)g(t-kT) (ou symboles) émis successivement toutes les T secondes se superposent partiellement (Fig. 2B). D'après la résultante de cette superposition (Fig. 2C), il est clair que ce phénomène contribue largement à rendre difficile l'analyse du type de modulation.

Par ailleurs, les symboles utilisés sont choisis dans un alphabet ou constellation de symboles (exemple en figure 2D), eux aussi exprimés en notation complexe.

La Demanderesse s'est posé le problème de déterminer quel est le type de modulation employé dans un message capté, pour déterminer ensuite les paramètres utilisés pour cette modulation, jusqu'à l'état (ou valeur) de la suite de symboles effectivement transmis.

La présente invention vient proposer une solution applicable notamment au modèle de modulation numérique linéaire évoqué ci-dessus, lequel sera utilisé dans les exemples donnés ci-après. Il est rappelé que font partie notamment de ce modèle de modulation numérique linéaire :

- la modulation par codage à saut de phase (PSK pour "phase shift keying"),
- la modulation par codage à saut d'amplitude (ASK pour "amplitude shift keying"), et
- la modulation d'amplitude en quadrature (QAM pour "Quadrature Amplitude Modulation").

Avant d'en aborder la description détaillée, on énoncera d'abord les traitements proposés d'une manière générale.

Au niveau du principe, on estime d'abord les différentes inconnues du modèle, en supposant que le signal intercepté correspond bien à une modulation numérique linéaire; ensuite, à partir de ces estimées, on validera ou non cette hypothèse.

Pour y arriver, la Demanderesse s'est intéressée d'une part aux techniques de calcul matriciel sur des nombres complexes (algèbre linéaire), d'autre part à des aspects statistiques du traitement de signal.

Les symboles contenus dans le signal de départ sont tirés d'un "alphabet" de symboles a priori inconnu, avec une modulation élémentaire (la modulation appliquée à chaque symbole) qui est également inconnue.

Cependant, la Demanderesse a tout d'abord observé que, le signal de départ étant de durée finie, le nombre de symboles successifs qu'il contient est également fini. La Demanderesse a alors pensé qu'après avoir supposé que ce signal de départ vérifie le modèle de modulation numérique linéaire, il doit exister un moyen - au moins - de retrouver la suite des symboles, en s'intéressant au nombre de degrés de liberté (ou paramètres) qui sont nécessaires pour obtenir une représentation du signal de départ (après démodulation approximative dans l'exemple décrit).

La Demanderesse a recherché un tel moyen. Ce faisant, elle s'est intéressée tout d'abord à la manière de représenter le signal de départ (de préférence après une première démodulatison). Comme on le verra ci-après, elle a trouvé des "bases de fonctions" qui permettent, par "projection", de représenter la plupart des signaux que l'on peut rencontrer en pratique, et ceci avec une perte d'informations minime, négligeable en l'espèce.

A partir de là, elle a développé une technique, non limitative, reposant sur des propriétés intéressantes d'une solution particulière du modèle de modulation numérique linéaire; pour la détermination des symboles, la Demanderesse s'appuie également sur le fait que ceux-ci sont décorrélés ou faiblement corrélés entre eux.

Ladite solution particulière, sur laquelle on reviendra ci-après, est unique, et permet d'engendrer, par des combinaisons linéaires, toutes les solutions possibles, comme on le verra également. Il s'agit de la solution $h_m(t)$ dont la longueur du support est la plus petite.

On sait que, mathématiquement, le "support" d'une fonction $f(x)$ peut être défini comme l'ensemble des valeurs de la variable x pour lesquelles la fonction $f(x)$ est différente de zéro. On traite ici de fonctions du temps représentant un signal de durée finie. Ainsi, le signal $z(t)$ a un support borné; de même, la fonction de modulation élémentaire modulée $g_m(t)$ a un support borné, que l'on peut appeler "longueur temporelle" de la modulation élémentaire. De son côté, le support de la fonction $h_m(t)$, c'est à dire la longueur de l'intervalle de temps sur lequel $h_m(t)$ est non nulle, est au plus égal à la longueur temporelle de la modulation élémentaire. On le comprend, du fait que la modulation élémentaire doit pouvoir se décomposer selon la fonction $h_m(t)$.

On verra encore qu'après application de cette solution $h_m(t)$ de support minimal, les symboles $c_m(k)$ associés à cette solution particulière s'expriment d'une manière relativement simple en fonction des vrais symboles $a(k)$ du résidu de porteuse $\Delta f_0 = f_0 - f_a$ et d'un résidu de filtrage $\alpha_i$, et permettront d'accéder à ces inconnues.

Il serait concevable de travailler sur la base d'une solution autre que celle de "support minimal", mais l'expression du résidu serait alors plus compliquée.

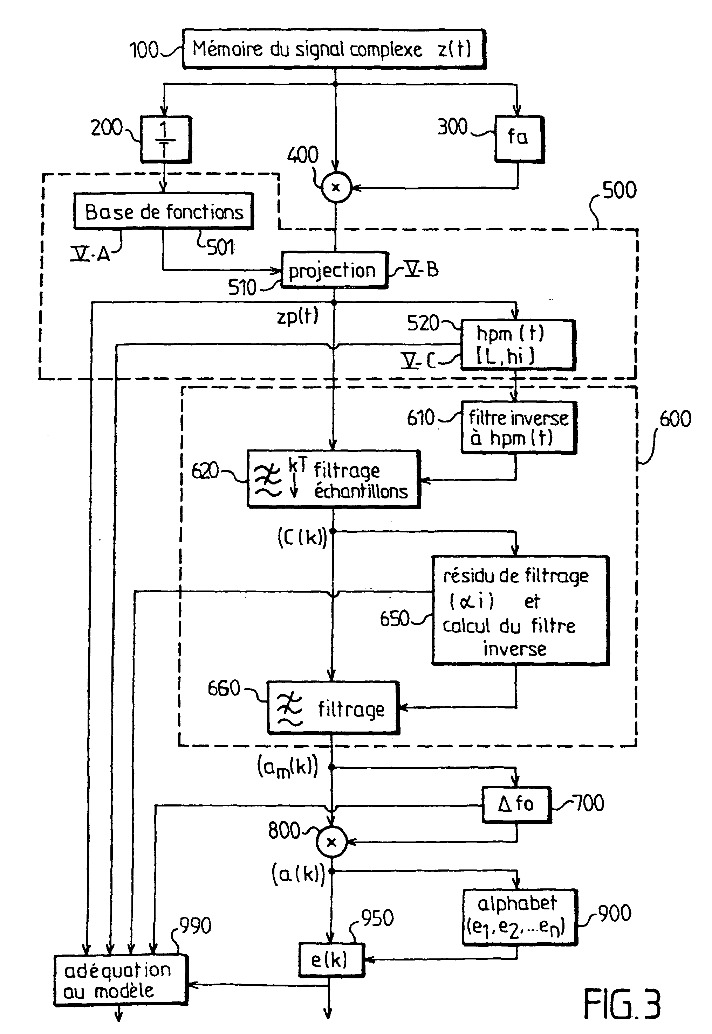

Les différents stades du traitement décrit en détail ci-après sont (figure 3):

- passage en signal complexe $z(t)$ (100),
- estimation du rythme $1/T$ (200),
- estimation "approchée" $f_a$ de la fréquence porteuse $f_0$ (300),
- démodulation du signal complexe $z(t)$ par cette fréquence porteuse approchée $f_a$ (400),
- estimation de la fonction $h_{pm}(t)$ (500,501,510,520),
- estimation des symboles modulés $c_m(k)$ associés à $h_{pm}(t)$ (610),
- estimation du résidu de filtrage $\alpha_i$ et des symboles $a_m(k)$ à partir des symboles $c_m(k)$ (650),
- estimation du résidu de porteuse $\Delta f_0$ (700),
- démodulation des symboles $a_m(k)$ par le résidu de porteuse (800), afin qu'il ne reste que des symboles $a(k)$,
- estimation des états ou valeurs possibles $e_i$ des symboles $a(k)$ à l'aide de l'alphabet (900),
- estimation du train de symboles effectivement émis $e(k)$ en fonction des états possibles (950),

- détermination de l'adéquation du modèle d'une modulation numérique linéaire (990), utilisant les paramètres estimés précédemment (validation ou non de l'hypothèse).

Pour faciliter la compréhension, on décrira l'ensemble des traitements, depuis la réception du signal électromagnétique. Mais il doit être clair, comme déjà indiqué, que la mise en oeuvre de l'invention peut se faire à partir d'un signal enregistré, ayant déjà subi une partie des traitements, en particulier le passage au signal complexe, auquel cas il est déjà disponible en mémoire 100.

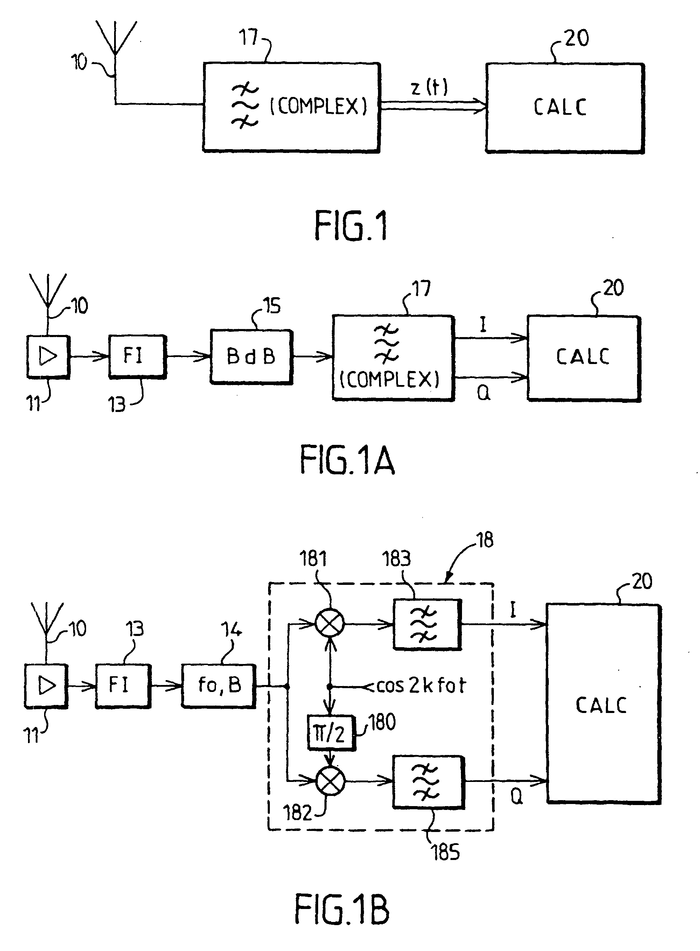

La figure 1 illustre le principe du passage en signal complexe (100). Le signal réel reçu, tel qu'issu d'une antenne 10 se définit par l'expression E1. Pour les traitements, on lui fait subir un filtrage complexe 17, dont la fonction de transfert est adaptée au spectre du signal comme on le verra ci-après. Ce filtrage fournit à un calculateur 20 un signal complexe $z(t)$ possédant une composante "en phase" I et une composante "en quadrature" Q. L'homme du métier sait que ce signal complexe peut être représenté comme les nombres complexes.

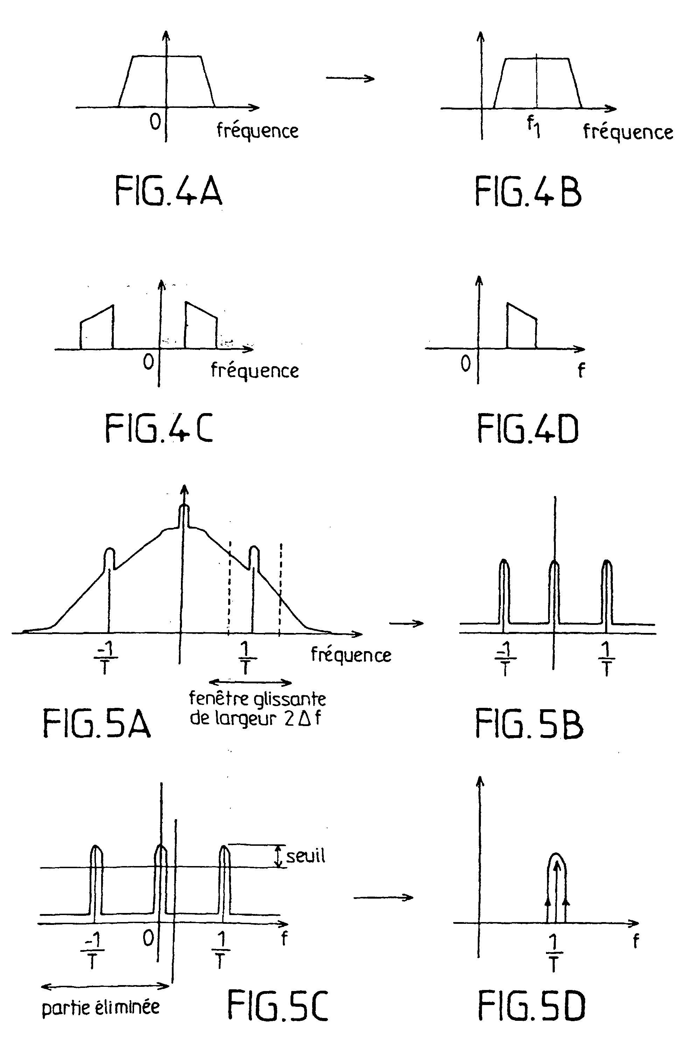

Un filtre complexe centré sur une fréquence $f_1$ peut être défini par sa réponse impulsionnelle, qui correspond à la relation E2 : on part de la réponse impulsionnelle $p(t)$ d'un filtre passe-bas réel classique (Fig. 4A), que l'on multiplie par l'expression E3, d'où le spectre décalé de la figure 4B. Le mot "réel" signifie ici, comme dans la suite, "à valeurs réelles", par opposition aux valeurs complexes. Ainsi, en référence à la figure 1, si le spectre du signal d'entrée est celui de la figure 4C, un filtre ayant la fonction de transfert de la figure 4B donne un signal complexe ayant le spectre de la figure 4D.

Dans un mode de réalisation (figure 1A), on prévoit, après l'amplificateur de réception 11, un ou des étages 13 à fréquence intermédiaire (FI), suivis d'un étage 15 de conversion en bande de base, puis du filtrage complexe 17. La conversion analogique numérique se fait généralement soit à l'entrée de l'étage 15, soit à l'intérieur de celui-ci, soit à sa sortie (avec une cadence d'échantillonnage plus basse dans ce dernier cas).

D'autres techniques sont envisageables pour obtenir le signal complexe, en particulier une transformée de Hilbert (non représentée), ou bien une démodulation complexe IQ en une composante en phase I et une composante en quadrature Q, comme illustré en figure 1B : après un étage 14, où le signal se trouve dans une bande B autour d'une fréquence centrale $f_0$, on prévoit un étage 18, avec deux voies de mélangeurs 181 et 182, recevant directement ou en quadrature (étage 180) un signal $\cos 2\pi f_0 t$ ; les mélangeurs sont suivis de filtres 183 et 185, qui donnent les sorties I et Q, respectivement. La conversion analogique numérique se fait généralement avant ou après l'étage 18.

Le stade 200 consiste en une estimation du rythme 1/T de la modulation inconnue qui est présumée exister dans le signal reçu. On décrira maintenant l'une des techniques utilisables à cet effet.

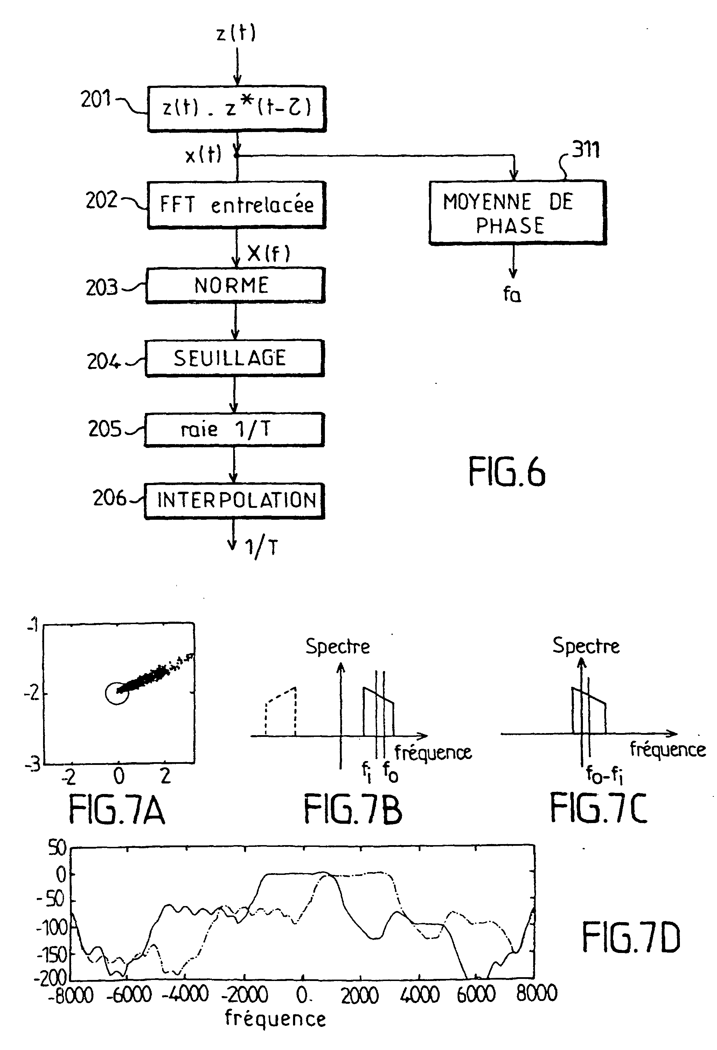

A partir du signal complexe $z(t)$, on forme en 201 (figure 6) le signal $x(t)$ de l'expression E4, où le décalage temporel $\tau$ est petit devant la valeur T égale à l'inverse du rythme que l'on cherche. On sait que, pour conjuguer $z(t - r)$ dans E4, il suffit de changer le signe de sa composante imaginaire complexe. Le décalage temporel $\tau$ peut être choisi égal au pas d'échantillonnage.

La Demanderesse a relevé que le rythme recherché correspond, dans le spectre de ce signal $x(t)$, à une raie de fréquence (1/T). Pour la suite des traitements, il est utile d'estimer la position de cette raie, aussi précisément que possible.

Pour cela, on calcule en 202 le spectre $X(f)$ du signal $x(t)$. Avantageusement, on utilise pour cela une transformée de Fourier rapide (FFT) entrelacée (technique dite du "zero padding", bien connue de l'homme de l'art).

On choisit comme paramètre de la FFT un entrelacement d'au moins 8 (huit).

La sortie de cette FFT (Figure 5A) est ensuite traitée en 203, par exemple conformément à la relation E5 : on norme chaque valeur de $X(f)$ obtenue à une fréquence f par la moyenne des valeurs $X(f)$ obtenues pour des fréquences situées dans une fenêtre de largeur $2.\Delta f_i$, centrée autour de f. Ce traitement constitue une sorte de filtrage non linéaire de la sortie de la FFT qui vise à faire ressortir les raies contenues dans ce spectre (Figure 5B). La largeur $2\Delta f_i$ fixe le degré de filtrage obtenu. Ici, elle a été fixée par simulation à 20 fois l'inverse de la durée totale du signal analysé.

Ensuite, en 204, on seuille ce signal de façon à sélectionner les raies qu'il contient, et, en 205, les raies aux fréquences négatives sont ignorées (Fig. 5C).

A cause de l'entrelacement de la FFT, il reste plusieurs sous-raies au voisinage de f = 1/T (Fig. 5D). La valeur 1/T recherchée est alors estimée à l'étape 206 par une interpolation qui peut consister à ajuster une courbe, du type polynomiale, par exemple, qui passe par les sommets de ces différentes sous-raies et en prenant le maximum de cette courbe.

En parallèle sur l'estimation du rythme de la modulation, on détermine une estimée approchée $f_a$ de la fréquence porteuse $f_0$ (stade 300). L'estimée approchée est utile, dans la mesure où elle servira à effectuer une première démodulation, qui permet de travailler ensuite à basse fréquence : la base de fonctions sera définie en basse fréquence, et les calculs matriciels seront effectués sur des échantillons également disponibles à basse fréquence.

L'estimée approchée $f_a$ peut être obtenue de différentes manières. La Demanderesse prend de préférence pour $f_a$ la valeur moyenne de la fréquence instantanée du signal. Cette valeur moyenne $f_a$ est par exemple calculée comme suit:

- comme en 201, on prend d'abord le signal x(t) de l'expression E4, puis
- en 311, on calcule la valeur moyenne de la phase de x(t), sur l'ensemble de la durée du signal, et on la divise par $2\pi\tau$.

Cette technique repose sur le fait que, si r est petit devant T, l'écart entre la phase du signal z(t) à l'instant t et la phase à l'instant $(t-\tau)$ ne dépend que de $\tau$ et $f_0$. Comme précédemment, $\tau$ peut être choisi égal au pas d'échantillonnage (cas de la figure 6), ou bien calculé en prenant une fraction de T petite.

La figure 7A montre un exemple, où x(t) est définie par un nuage de points, correspondant à une valeur moyenne $f_a$ = 1940 Hz.

Si l'on a estimé $f_a$, on procède (stade 400) à une démodulation du signal complexe z(t) par cette estimée approchée $f_a$ de la porteuse $f_0$, de manière connue. Numériquement, la démodulation consiste en une multiplication complexe du signal z(t) par une expression semblable à E3, où $f_1$ est remplacée par $-f_a$.

Après cette démodulation, le spectre initial (Fig. 7B) du signal complexe vient se centrer approximativement sur la fréquence zéro (Fig. 7C). Le décentrage résiduel du spectre correspond à un petit résidu de porteuse $\Delta f_0$ égal à $f_0 - f_a$. Un exemple est donné en figure 7D, où le trait mixte représente le spectre du signal avant démodulation, tandis que le trait continu représente le spectre du signal après démodulation.

On notera à nouveau z(t) le signal obtenu après démodulation par $f_a$. Conformément au modèle de modulation numérique linéaire. Ce signal z(t) satisfait désormais la formule E10. La Demanderesse a observé que ce signal z(t) peut aussi s'écrire selon l'expression E14, comme une somme de produits dont chacun fait intervenir:

- une fonction de modulation élémentaire modulée $g_m(t)$, définie par la relation E12, et
- une suite de symboles modulés $a_m(k)$, définie par la relation E13.

Dans ces expressions et par la suite, l'indice m signifie "modulé", et k va de 1 à kx, qui est le nombre total de symboles intervenant dans le signal analysé.

La démonstration de ceci passe par la ré-écriture de la formule E10 de la façon exprimée dans la formule E11.

On notera que l'expression E14 est "sans porteuse apparente", c'est à dire que le résidu de porteuse $\Delta f_0$ n'y apparaît plus explicitement. En effet, il est contenu dans la fonction de modulation élémentaire "modulée" $g_m(t)$ et dans les symboles modulés $a_m(k)$.

Pour accéder aux symboles, il y aura lieu d'estimer cette fonction de modulation élémentaire $g_m(t)$. Sont également inconnus le résidu de porteuse $\Delta f_0$, l'ensemble des symboles utilisés, ou "alphabet", et la suite ou train de symboles précisément contenus dans le signal de départ.

Dans le mode de réalisation décrit, le stade 500 (501-520) consiste en l'estimation de la fonction de modulation élémentaire modulée, c'est à dire de la fonction $g_m(t)$. On en déduira les symboles modulés $a_m(k)$ au stade 600 (610-650) (voir figure 3).

Se présente d'abord la difficulté suivante : travailler avec un signal défini pour chaque valeur de t est une tâche difficile, compte-tenu du nombre potentiellement très élevé de valeurs à considérer.

La Demanderesse propose de procéder à une approximation, en projetant le signal z(t) sur une « base » de fonctions, choisie à l'avance. Cette base (au sens mathématique du mot) est en fait une famille libre, de préférence orthonormée, de fonctions $(\varphi_1(t),\varphi_2(t),...,\varphi_b(t))$.

On choisit une base de fonctions $(\varphi_1,\varphi_2,...\varphi_b)$ adaptée au rythme 1/T tel qu'estimé précédemment, et construite par exemple de la façon indiquée dans les expressions E25 et E26. Dans ces expressions, rect() désigne la fonction rectangulaire sur l'intervalle de temps indiqué en dessous. L'entier q est tel que le produit q.T soit sensiblement égal à la longueur du signal analysé. b correspond au nombre de fonctions de base nécessaire pour couvrir toute la durée du signal analysé.

D'autres bases de fonctions envisageables seront indiquées plus loin. Toutefois, la Demanderesse considère actuellement que la base de fonctions des expressions E25 et E26 demeure la plus simple, et donne des approximations largement suffisantes pour les signaux rencontrés en pratique.

Quel que soit le mode de réalisation choisi, il existe dans le dispositif une "représentation" de la base de fonctions. C'est ce qui est rappelé par le bloc 501 de la figure 3. En l'espèce, cette représentation est paramétrable par T.

Dans le mode de réalisation décrit en détail ci-après, on utilise la base définie par E25 et E26. On a ainsi deux fonctions de base par intervalle de T secondes : on obtiendra ainsi deux coefficients de projection toutes les T secondes (on dit aussi "deux points par symbole", étant donné que l'on reçoit un symbole toutes les T secondes). On verra plus loin comment l'invention peut s'étendre à des valeurs entières supérieures à 2 $(q \geq 2)$.

L'approximation commence alors par le calcul de la projection du signal z(t) dans l'espace (également au sens mathématique du mot) engendré par les fonctions $\varphi_i(t)$. Ce signal projeté ne sera alors plus défini que par des coefficients de projection, qui eux, seront en nombre fini, inférieur au nombre d'échantillons temporels du signal z(t).

Le signal z(t) est donc tout d'abord projeté (510, fig. 3) sur la base de fonctions définie par les relations E25 et E26. Cette projection est notée $z_p(t)$, où l'indice p signifie « projeté ».

La Demanderesse a observé qu'approximer le signal z(t) par sa projection dans la base des $\varphi_i(t)$ revient à approximer les fonctions $g_m(t-kT)$ (k variant) intervenant dans le modèle du signal par leurs projections dans cette même "base". On choisit la base de telle sorte que toutes les fonctions de base se déduisent par translation d'un nombre entier de T d'un petit nombre de fonctions $\varphi_1(t)$, $\varphi_2(t)$,... (deux fonctions pour une base à deux points par symboles, q fonctions dans le cas général). La Demanderesse a alors observé que les projections des fonctions $g_m$ (t-kT) se déduisent les unes des autres par translation de T: elles sont donc définies par les mêmes coefficients de projection à un décalage près dans le temps. Tout se passe comme si on avait approximé la fonction inconnue $g_m(t)$ par sa projection dans la base $\varphi_i(t)$, qui s'écrit avec un petit nombre de coefficients inconnus, qu'il s'agira de trouver.

Pour plus de simplicité, on choisit les fonctions $\varphi_1(t)$, $\varphi_2(t)$,... générant la base par translation de kT ($k \in N$), de telle sorte qu'elles se déduisent, elles aussi, par translation de T/2 (plus généralement de T/q, $q \in N$) d'une même fonction $\varphi_i(t)$. On obtient ainsi les bases E25 et E26 (deux points par symbole) et E34 et E35 (q points par symbole), où les fonctions $\varphi_i(t)$ se déduisent finalement les unes des autres par translation respectivement de kT/2 et kT/4 ($k \in Z$).

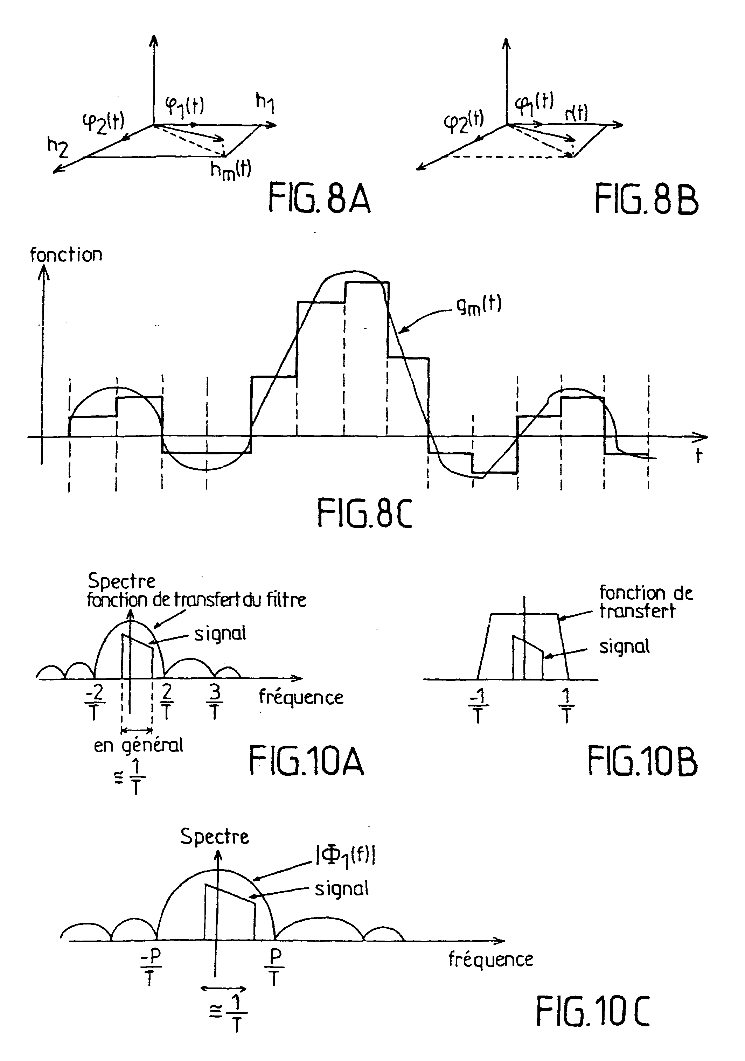

La Demanderesse a observé en outre que les fonctions $g_m(t)$ rencontrées en pratique sont suffisamment lisses pour être approximées avec peu d'erreurs dans ces bases de fonctions. Un exemple schématique d'une telle approximation est illustré sur la figure 8C.

La Demanderesse a aussi observé que, pour projeter le signal z(t) dans la base de fonctions définie par les relations E25 et E26, il est possible de filtrer le signal par le filtre de réponse impulsionnelle $\varphi_1(-t)$ (expression E25), puis d'échantillonner la sortie de ce filtre toutes les T/2 secondes. Il apparaît donc que la réalisation de cette projection est particulièrement simple.

Comme le montre la figure 10A, le signal est centré sur la fréquence zéro et possède, dans les cas pratiques, une bande spectrale de largeur 1/T. Le filtre de projection est aussi centré sur la fréquence zéro ; par contre, il possède une bande de 2/T (à 4 dB). L'homme du métier en déduira, comme cela a déjà été dit pour la fonction $g_m(t)$, que l'approximation faite par cette projection a pour effet que la partie du signal perdue par projection est négligeable.

Incidemment, on remarquera des synergies intéressantes de ce mode de réalisation: l'estimation préalable du rythme permet que la projection du signal sur la base de fonctions soit bien synchronisée sur le rythme de modulation ; l'estimation de la moyenne de la fréquence instantanée permet que cette projection se fasse sur une base de fonctions de basse fréquence.

Les travaux de la Demanderesse ont montré qu'avec deux échantillons par symbole (au moins), c'est-à-dire avec au moins deux fonctions de projection toutes les T secondes, il devient possible de trouver des solutions du modèle (de modulation numérique linéaire) qui correspondent au signal de départ, à l'aide de techniques de calcul matriciel (bloc 520, fig. 3).

Cependant, lesdits travaux ont montré aussi que, pour un signal de départ donné, la relation E14 admet une multiplicité de couples de solutions possibles.

Parmi toutes ces solutions possibles, la Demanderesse s'est attachée à rechercher celle qui vérifie la propriété suivante: il s'agit de la solution donnant des symboles modulés $a_m(k)$ qui, après démodulation, prendront un nombre fini, et le plus petit possible, de valeurs.

Après avoir envisagé d'imposer cette contrainte directement, la Demanderesse préfère actuellement procéder en deux temps, comme on le verra.

Au moins lorsque z(t) est un signal issu d'une modulation numérique linéaire, la Demanderesse a montré ce qui suit :

- parmi les nombreuses solutions possibles de la modélisation, il n'en existe qu'une seule $(c_m(k),h_m(t))$ vérifiant la relation E20, où $h_m$ est, parmi les fonctions de modulation solutions, celle dont la longueur du support est la plus petite ;
- en outre, cette solution particulière $(c_m(k),h_m(t))$ engendre l'ensemble des solutions possibles de la façon suivante: si $(a_m(k),g_m(t))$ est une autre solution, alors il existe n coefficients $(\alpha_1, ...\alpha_n)$ permettant de vérifier l'expression E21 donnant $g_m(t)$, tandis que les symboles $a_m(k)$ sont définis récursivement, pour tous les k, par l'expression E23.

Elle en a tiré que la fonction de modulation élémentaire modulée $g_m(t)$ peut s'écrire selon l'expression E21, où $h_m(t)$ est l'unique fonction solution de support le plus petit.

S'appuyant sur les remarques qui précèdent, la Demanderesse préconise de décomposer la recherche de la fonction $g_m$ en deux parties:

- dans un premier temps, on recherche la solution $(c_m(k),h_m(t))$ avec la contrainte que $h_m(t)$ ait le support le plus petit possible,
- ensuite, à partir des symboles $c_m(k)$ correspondant à cette solution $h_m$, et se modélisant selon l'expression E23, on estime la deuxième partie de la fonction $g_m$, à savoir les coefficients $(\alpha_i)$, qu'on nomme globalement "résidu de filtrage".

On modélisera par la suite le signal par le couple de relations E22 et E23, où $h_m(t)$ est la fonction solution de support le plus petit, et les $(\alpha_i)$ sont le résidu de filtrage.

Comme cela a été dit précédemment, approximer le signal $z(t)$ par sa projection dans l'espace des fonctions $\varphi_i(t)$ revient à approximer la fonction $g_m(t)$ par sa projection dans ce même espace. Il en est de même pour la solution particulière $h_m(t)$, que l'on va remplacer par sa projection dans la base des fonctions $(\varphi_1(t),\varphi_2(t),...,\varphi_b(t))$. Cette projection $h_{pm}(t)$ ne sera alors plus définie que par un petit nombre de coefficients de projection.

Maintenant, la projection $z_p(t)$ de $z(t)$ ne se modélise plus qu'à partir de la projection $h_{pm}(t)$ de $h_m(t)$. La (petite) partie du signal qui est orthogonale à la « base » de projection est perdue. La base de fonctions E25, E26 a été choisie de telle sorte que la partie du signal perdue soit suffisamment faible pour les signaux rencontrés en pratique.

On donnera maintenant, en référence à la figure 9, un exemple du déroulement des traitements visant à estimer $h_m(t)$.

Tout d'abord, comme déjà indiqué, le signal $z(t)$ est projeté sur la base de fonctions $\varphi_i(t)$. En l'espèce, cela consiste, en 510, à filtrer le signal $z(t)$ par le filtre de réponse impulsionnelle $\varphi_1(-t)$ (expression E25), puis, en 523, à échantillonner la sortie de ce filtre toutes les T/2 secondes, jusqu'à la fin du signal $z(t)$.

On estime ensuite la fonction $h_{pm}(t)$ de support le plus petit, qui soit solution de l'équation E30.

La projection $z_p(t)$ du signal $z(t)$ peut s'écrire à partir de ses coefficients de projection $z(k)$ selon la relation E36 (avec p pour projeté).

De son côté, la projection $h_{pm}(t)$ de la fonction de support le plus petit $h_m(t)$ s'écrit selon la relation E37, où L est la longueur de $h_{pm}(t)$, comptée en nombre de périodes T. Autrement dit, la longueur de $h_{pm}(t)$ est supérieure à $(L-1).T$ et inférieure ou égale à $L.T$.

Compte-tenu de la cadence de deux échantillons (deux coefficients de projection) par symbole toutes les T secondes, deux échantillons successifs de rang $2k + 1$ et $2k + 2$ de la projection $z_p(t)$ correspondent au couple de valeurs $z(2k+1)$ et $z(2k+2)$, lequel couple se modélise selon les relations E38.

La première étape du traitement consiste à estimer la longueur L de $h_{pm}(t)$.

A cet égard, la Demanderesse a remarqué que les longueurs des fonctions de modulation élémentaire $g_m(t)$ rencontrées en pratique sont généralement inférieures à 10 fois T.

On choisit alors une borne supérieure paramétrable $L_1$, telle que $L_1 = 10.T$. A chaque rang k, l'étape 525 fait correspondre un vecteur ou matrice unicolonne $Z_{L_1}(k)$ conforme à l'expression E41. Les vecteurs $Z_{L_1}(k)$ correspondent à des tranches de signal $z(t)$ prises entre des instants $kT$ et $(k + L1)T$. Ce vecteur $Z_{L_1}(k)$ contient $2.L1$ composantes successives en $r(k)$, allant de $(2.k+1)$ à $(2.k+2.L1)$. Les vecteurs $Z_{L_1}(k)$ se recouvrent en grande partie les uns les autres: $Z_{L_1}(k+1)$ se déduit de $Z_{L_1}(k)$ en supprimant en haut $z(2k+1)$ et $z(2k+2)$, en faisant remonter les autres éléments de deux cases, et en ajoutant en bas $z(2k+2L1+1)$ et $z(2k+2L1+2)$. La construction de ces vecteurs $Z_{L_1}(k)$ à partir des données de base se fait donc avec un entrelacement.

En 527, on forme la matrice carrée $M_{L_1}$, de dimension $2.L1$, définie par la relation E42. Il s'agit d'une sorte de matrice de covariance des grandeurs $z(k)$; cependant, à la différence de la covariance habituelle, les vecteurs constitutifs sont entrelacés ; c'est pourquoi la Demanderesse propose de nommer $M_{L_1}$ la "matrice de covariance entrelacée".

On calcule en 529 les valeurs propres de $M_{L_1}$, de manière connue. L'analyse de celles-ci permet d'accéder à la longueur L de la fonction $h_{pm}(t)$, car la Demanderesse a établi que la matrice $M_{L_1}$ possède $L_1 + L - 1$ valeurs propres positives non nulles, et $L_1 - L + 1$ (inférieur à $L_1 + L - 1$) valeurs propres nulles, en fait presque nulles à cause du bruit.

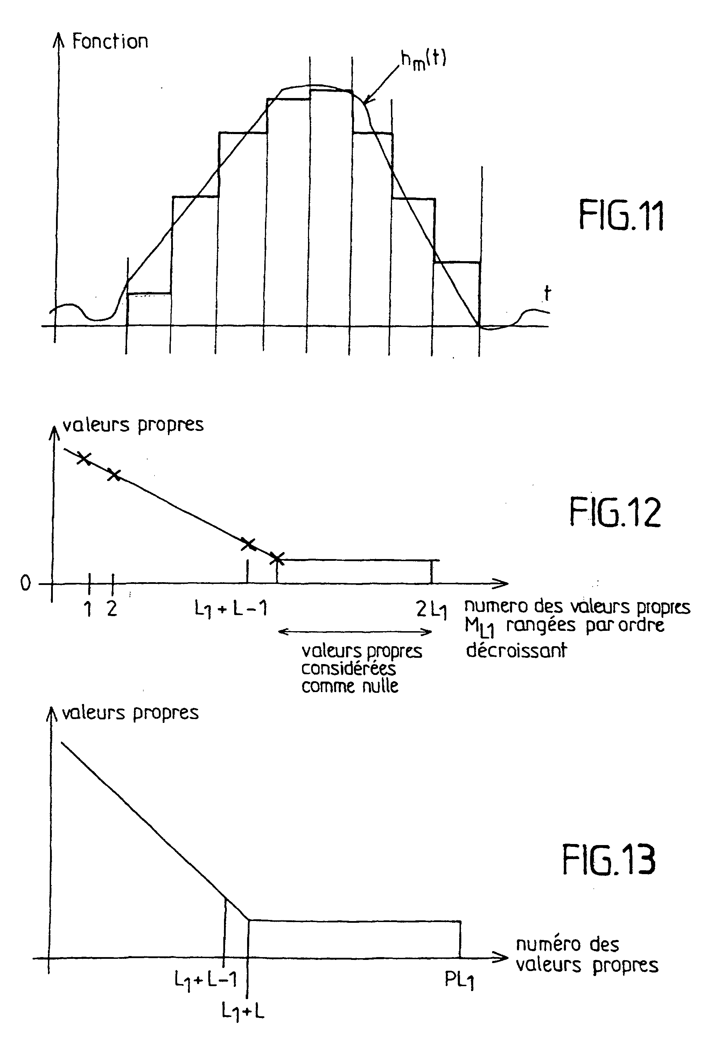

Par exemple, on peut ranger ces valeurs propres par ordre décroissant de grandeur. La répartition des valeurs propres est approximativement donnée par la figure 12, où l'ordonnée est la grandeur des valeurs propres, lesquelles sont rangées par ordre décroissant de grandeur en abscisse. On estime l'indice ou rang de la valeur propre (après tri) qui correspond au point de cassure de la ligne de la figure 12, c'est à dire au point où l'on descend brusquement à des valeurs propres presque nulles, correspondant au bruit. Ce point de cassure est estimé classiquement en utilisant le critère dit "MDL" (pour Minimum Description Lenght). On pourra se référer à l'article "Detection of Signals by Information Theoretic Criteria", IEEE Transactions on Acoustics, Speech and Signal Processing, Avril 1985, p387. L'estimation de ce point de cassure peut être interprété comme l'estimation du rang de la matrice $M_{L_1}$.

La longueur L de la fonction $h_{pm}(t)$ est donnée par le rang après tri de la première valeur propre nulle.

On forme maintenant en 535 des vecteurs $Z_L(k)$ définis par les $2.L$ composantes consécutives en $z(k)$ de l'expression E44. En 537, on forme, à partir de ces vecteurs $Z_L(k)$, la matrice $M_L$ (dimension $2L \times 2L$) de l'expression E43 (similaire à l'expression E42, mais avec L au lieu de $L_1$).

Cette matrice $M_L$ est une autre "matrice de covariance entrelacée", mais avec un entrelacement restreint à L au lieu de L1. Les vecteurs $Z_L(k)$ correspondent à des tranches du signal $z_p(t)$ prises entre les instants $kT$ et $(k + L)T$.

Le traitement est alors le suivant. En 539 on détermine la plus faible valeur propre de $M_L$ en calculant, par exemple, comme précédemment, toutes les valeurs propres (qui sont positives à cause de la symétrie hermitienne de $M_L$) et en les rangeant par ordre décroissant.

En 541, on calcule le vecteur propre associé à cette valeur propre la plus faible. La Demanderesse a en effet établi:

- que la matrice $M_L$ a dans ce cas une seule valeur propre $\lambda$ presque nulle,
- que la grandeur de cette valeur propre permet d'estimer la puissance du bruit $\sigma^2 = \lambda / L$, et
- que le vecteur propre associé à cette valeur propre (expression E45) ne dépend que de la fonction $h_{pm}(t)$, solution ayant le support le plus petit.

En 543, les coefficients de projection de $h_{pm}(t)$ sont donc obtenus (au signe près) en prenant dans l'ordre les conjugués complexes des composantes de ce vecteur propre, et en changeant une fois sur deux le signe de ces composantes (on peut travailler au signe près).

On notera au passage que les étapes 535 à 539 sont les mêmes que 525 à 529, en remplaçant L1 par L. Elles peuvent donc être mises en oeuvre par les mêmes moyens de calcul.

Ce traitement peut être interprété comme suit :

- les vecteurs $Z_{L1}(k)$ correspondent à un découpage du signal $z_p(t)$ en tranches de longueur $L_1.T$, qui se recouvrent;
- ces vecteurs sont définis par les $2.L_1$ coefficients de projection $(z(2k + 1),...,z(2k + 2L1))$, qui sont a priori susceptibles de prendre n'importe quelle valeur dans l'espace vectoriel de dimension $2.L_1$ correspondant;
- cependant, sur chaque tranche ce signal $z_p(t)$ devient le signal $u(t)$ conforme à la relation E47, dont les éléments $z_1(t),...,z_{L+L1-1}(t)$ sont définis par les relations E48;
- par conséquent, sur chacune de ces tranches, le signal $z_p(t)$ est toujours une combinaison linéaire des mêmes $(L_1+ L - 1)$ signaux $z_1(t),...,z_{L+L1-1}(t)$, combinaison linéaire dont les coefficients sont les symboles $c_m(k)$ intervenant dans la tranche considérée et variant donc d'une tranche à l'autre;
- bien que défini au départ à partir de ses $2.L_1$ coefficients de projection $(z(2k + 1),...,z(2k + 2L1))$, chaque tranche du signal $z_p(t)$ ne prend donc en fait ses valeurs que dans le même sous-espace de fonctions engendré par les $L_1 + L - 1$ signaux définis ci-dessus.

La Demanderesse a montré aussi que la condition « $h_{pm}$ est la solution ayant le support le plus petit » est équivalente à la condition « les $L_1+L-1$ signaux précédents sont linéairement indépendants ».

Sur chaque tranche de longueur $L_1T$, le signal $z_p(t)$ prend donc ses valeurs dans un espace de dimension $L_1+L-1$.

La matrice $M_{L1}$ définie précédemment permet, par diagonalisation, d'estimer le sous-espace contenant ces tranches de signal, à partir des vecteurs propres associés aux valeurs propres non nulles. Pour simplifier le traitement, on peut, comme décrit, n'estimer que le rang $L_1+L-1$ de cette matrice $M_{L1}$ (nombre de valeurs propres qui ne sont pas très faibles ou nulles). Après en avoir déduit L, il est alors possible de redécouper le signal en tranches de longueur L.T.

Le même raisonnement que précédemment permet alors de voir que ces tranches de signal engendrent, dans l'espace de fonctions de dimension 2.L, un sous-espace de dimension 2.L-1, car:

- on sait maintenant que chacune des tranches de longueur L.T du signal $z_p(t)$ est susceptible a priori de prendre ses valeurs dans un espace de dimension 2.L ; mais qu'en fait
- sur chacune de ces tranches, le signal $z_p(t)$ est toujours une combinaison linéaire des mêmes (2.L-1) signaux $s_1(t)...S_{L+L-1}(t)$ de l'équation E48 où l'on remplace L1 par L.

En bref, il existe, dans l'espace de fonctions, une direction qui est orthogonale à chacune des tranches de signal : c'est celle engendrée par le vecteur propre V de l'expression E45, associé à la valeur propre nulle de la matrice $M_L$.

On a maintenant estimé $h_{pm}(t)$. On peut alors passer au stade 600, qui est l'estimation du train de symboles modulés $c_m(k)$, associés à cette fonction $h_{pm}(t)$ estimée.

Ceci se fait en filtrant le signal $z_p(t)$ par le filtre inverse 610 de $h_{pm}(t)$. On indiquera maintenant une manière, non limitative, de calculer le filtre inverse, en passant par la matrice pseudo-inverse de la matrice de filtrage associée à $h_{pm}(t)$.

On part de l'expression de $h_{pm}(t)$ donnée en E58 qui est le résultat du traitement précédent, obtenue par son extension pour une projection à plus de deux points toutes les T secondes. Pour le cas particulier de deux points par symbole, traité jusqu'à présent, il suffit de poser q = 2.

On forme ensuite la matrice H, donnée par l'expression E63. Il s'agit d'une matrice rectangulaire de dimension qL.(L1 + L-1) que l'on peut appeler "matrice de filtrage". Elle est formée de la façon suivante. Chaque colonne possède q.L composantes. La première colonne est obtenue en prenant les q dernières composantes de $h_{pm}(t)$, et en complétant avec des zéros. Pour le reste, chaque colonne se déduit de la précédente par un décalage de q cases vers le bas, en complétant en haut par les composantes de $h_{pm}(t)$ dans l'ordre, puis par des zéros, lorsque ces composantes sont épuisées. On continue ainsi jusqu'à la dernière colonne ne contenant en haut que des zéros puis en bas les q premières de $h_{pm}(t)$. On obtient ainsi une matrice avec L1 + L -1 colonnes.

On forme alors le produit matriciel de l'expression E64, où l'homme du métier reconnaîtra la matrice pseudo-inverse de H, de dimension (2.L-1).qL. Les coefficients du filtre inverse sont estimés par la ligne numéro L de la matrice donnée en E64.

On applique alors en 610 le signal $z_p(t)$ au filtre inverse ainsi obtenu. La sortie correspond aux symboles $c_m(k)$ de l'expression E43, dans laquelle $\alpha_i$ est le résidu de filtrage et les $a_m(k)$ correspondent aux symboles recherchés, modulés par le résidu de porteuse $\Delta f_0$, toutes ces grandeurs étant encore inconnues à ce stade de l'algorithme.

Pour estimer ces inconnues, comme on l'a vu, la Demanderesse a envisagé d'imposer la condition suivante : les symboles $a_m(k)$, associés au résidu de filtrage $(\alpha_i)$, doivent correspondre à des symboles modulés, qui, après démodulation, prendront un nombre fini, et le plus petit possible, de valeurs. La condition que la Demanderesse préfère imposer aujourd'hui est : "le train de symboles $(a_m(k))$ est, parmi les solutions possibles donnant des symboles décorrélés, celui pour lequel l'alphabet (ensemble des valeurs possibles) est de taille la plus petite". La condition de décorrélation des symboles est donnée par la relation E70 et porte sur la covariance des symboles. La deuxième condition consiste en fait à choisir parmi les solutions permettant de surmonter la première contrainte, le train de symboles dont la variance du module des symboles est la plus faible (équation E80).

Ces deux contraintes, plus simples à mettre en oeuvre, aboutissent sensiblement au même résultat pour les signaux rencontrés en pratique. (Les vrais symboles émis sont généralement décorrélés.)

L'obtention des éléments individuels $(\alpha_i)$ du résidu de filtrage s'effectue en 650.

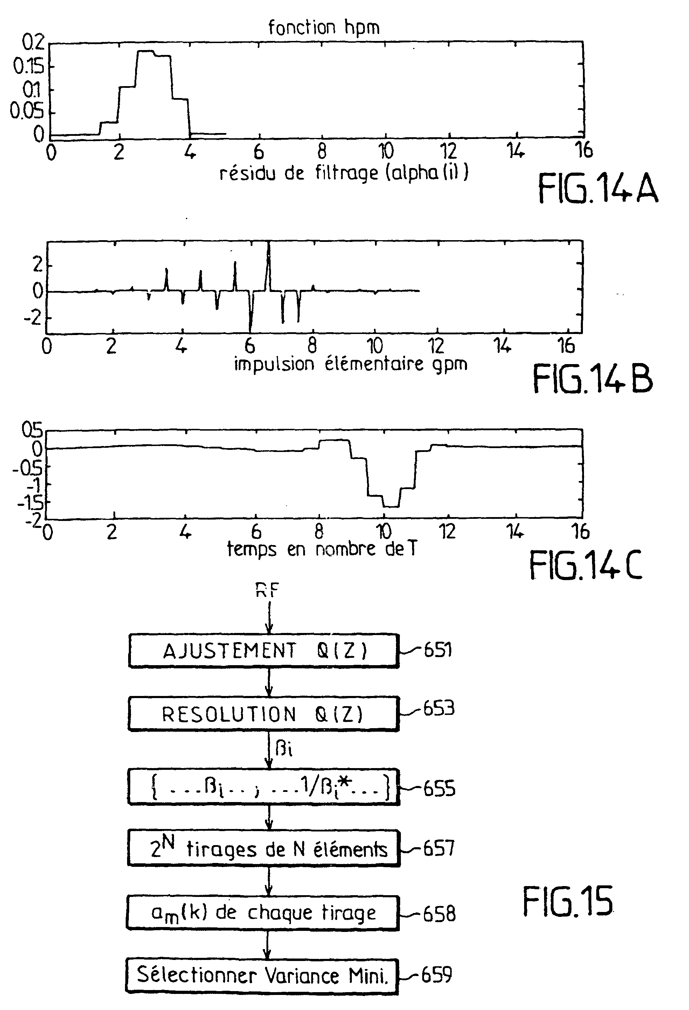

A l'étape 651 (figure 15), la Demanderesse part d'un polynôme Q(Z) construit à partir des mesures conformément à l'expression E73, où Z est la variable. Ensuite:

- en 653, on calcule les N racines complexes $\beta_i$ de module inférieur à 1 de ce polynôme Q(Z),
- en 655, on construit les $2^N$ possibilités différentes de N-uplets construites à partir des N racines $\beta_i$, en remplaçant, ou non, chaque racine $\beta_i$ par son inverse conjugué $1/\beta_i^*$. Chacun des N-uplets est alors interprété comme les racines d'un filtre,
- en 657, on obtient ainsi $2^N$ filtres possibles dont l'un correspond au résidu de filtrage $\alpha_i$ que l'on cherche à calculer,
- puis, en 658, pour chaque possibilité de filtre ainsi obtenue, on estime à partir des symboles $c_m(k)$ le train de symboles $a_m(k)$ qui lui correspond (par filtrage inverse) conformément à la relation E23.

Il reste alors en 659 à choisir, parmi ces $2^N$ trains de symboles possibles, celui qui correspond à des symboles $a_m(k)$, qui, après démodulation par le résidu de porteuse $\Delta f_0$ encore inconnu à ce stade, prendront le nombre, le plus petit possible, de valeurs différentes. Une façon d'opérer consiste alors à déterminer, parmi tous les trains de symboles possibles ainsi identifiés, celui dont la variance moyenne du module des symboles (encore modulés) est la plus petite. Cette variance est définie par la relation E80, dans laquelle nb désigne le nombre de symboles.

La base de ce traitement va maintenant être expliquée.

Au résidu de filtrage $(\alpha_i)$, on peut associer un polynôme P correspondant à sa transformée en Z dont la forme est décrite par l'expression E71, où N est un majorant du nombre n de coefficients $\alpha_i$. En effet, ce nombre n n'est pas connu à l'avance, mais on sait, pour les signaux rencontrés en pratique, lui trouver un majorant N. On a déjà vu, en effet, que les formes d'impulsion élémentaires g(t) rencontrées en pratique ont une longueur inférieure à 10.T. D'après l'expression E12, il en est donc de même pour $g_m(t)$. En utilisant l'expression E21, on en déduit donc que m est inférieur à 10 ( la longueur de $h_m(t)$ est en nombre de T au moins égale à 1). On prend en pratique N = 10 comme majorant, mais cette valeur est paramétrable dans l'algorithme. Prendre un majorant peut seulement avoir pour effet que les derniers coefficients $\alpha_i$ avec $i \in \{n+1,...,N\}$ soient nuls, si ce majorant N s'avère être supérieur à n.

On définit en plus le polynôme $P_2(Z)$ de l'expression E72, correspondant au module carré du polynome P(Z), et que l'on peut interpréter comme la transformée en Z du module carré de la fonction de transfert du résidu de filtrage $\alpha_i$. Il est possible aussi d'écrire les polynômes P(Z) et $P_2(Z)$ sous forme factorisée, selon les expressions E75 et E76, où les $\beta_i$ sont les racines du polynôme P.

La Demanderesse a montré, en utilisant l'hypothèse de décorrélation des symboles, que le polynôme $P_2(Z)$ peut être estimé par le polynôme Q(Z) précité, à une constante multiplicative près. Ce polynome Q(Z) peut être, lui, interprété comme une approximation de la transformée en Z de la fonction d'autocorrélation des symboles. Elle a également observé que :

- si $\beta_i$ est une racine de $P_2$ alors $1/\beta_i^*$ est aussi une racine de $P_2$,

- si $\beta_i$ est une racine de $P_2$ alors $\beta_i$ ou bien $1/\beta_i^*$ est une racine du polynôme P qu'on cherche à estimer.

Dans une variante, il est possible d'étendre ce traitement au cas de symboles qui seraient légèrement corrélés, c'est-à-dire éventuellement corrélés mais seulement avec leurs proches voisins, conformément à la relation E81. Dans ce cas, la Demanderesse a observé qu'une racine $\beta_i$ de Q(Z) ne sera pas toujours une racine de $P_2(Z)$, qui sert à définir les racines de P(Z).

Pour former les différentes possibilités pour P, pour chaque racine $\beta_i$ de Q et de module inférieur à 1, on aura maintenant le choix entre prendre $\beta_i$, ou bien prendre $1/\beta_i^*$, ou bien ne prendre ni $\beta_i$, ni $1/\beta_i^*$. Si N est le degré du polynôme Q, on aura donc $3^N$ filtres possibles pour choisir le résidu de filtrage. Le choix de la bonne solution se fait alors comme précédemment, en minimisant la variance du module des symboles.

On examinera maintenant un exemple de résultats de l'ensemble des traitements d'estimation de $g_{pm}(t)$ :

- la figure 14A illustre la fonction $h_{pm}(t)$ ;
- la figure 14B illustre le résidu de filtrage, où se détachent des pics correspondant aux coefficients $\alpha_i$ ;
- la figure 14C illustre la fonction élémentaire de modulation modulée $g_{pm}(t)$ ; et

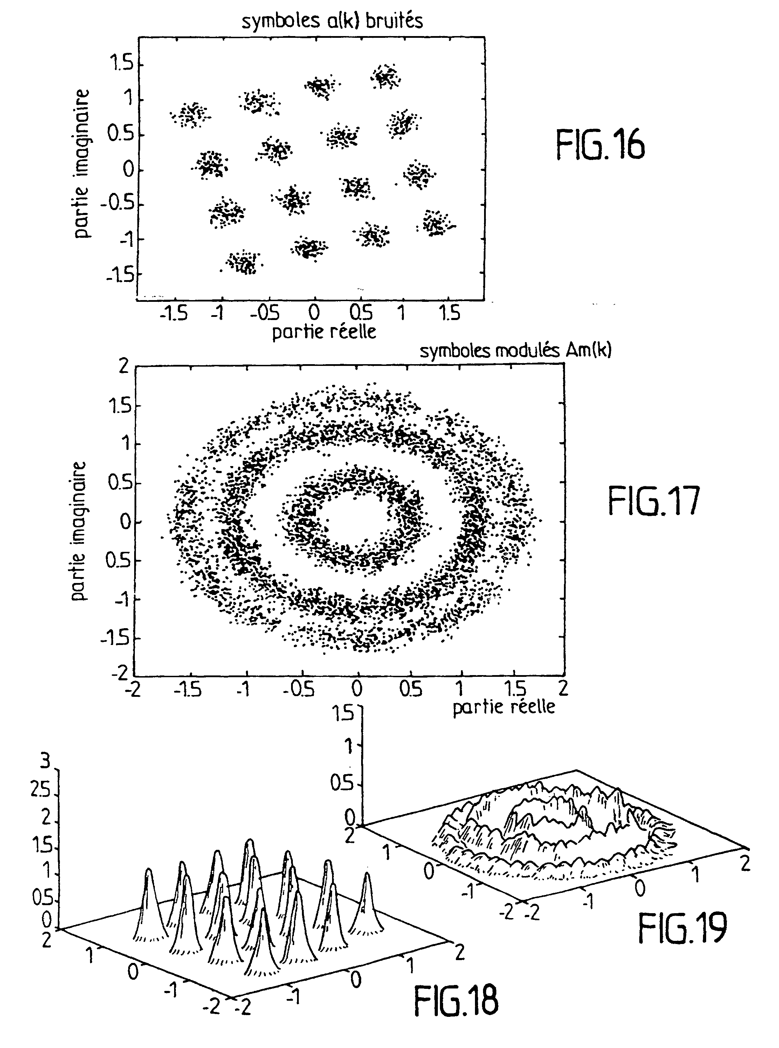

- la figure 17 illustre les symboles $a_m(k)$ en sortie du traitement, qui correspondent aux symboles recherchés, mais demeurant modulés par le résidu de porteuse $\Delta f_o$.

Ces symboles se modélisent par l'expression E13. Il convient maintenant de trouver le résidu de porteuse $\Delta f_o$ pour en déduire les vrais symboles a(k), entièrement démodulés. Le traitement 700 consiste à tester tout ou partie d'une plage de fréquences $[-f_1, f_1]$, discrétisée avec un pas suffisamment fin. Pour chaque valeur testée du résidu de porteuse, on calcule la densité de probabilité d(x,y) des symboles correspondants selon la formule E82, ou bien une autre grandeur de mêmes propriétés. On pourra se référer à l'article "an estimation of a probability density function and mode", E.Parzen, Annals of Mathematical Statistics, 1962. Le critère utilisé pour sélectionner la bonne valeur consiste à choisir la fréquence $\Delta f_o$ telle que l'expression E85 soit maximum. On peut assimiler la maximisation de ce critère à une minimisation de l'entropie (mesure du désordre) des symboles obtenues après démodulation. Il serait d'ailleurs possible de remplacer ce critère par d'autres fonctions de l'entropie.

Quand la fréquence testée est proche de la bonne valeur (Figure 16), la répartition dans le plan complexe des symboles a(k), qui s'en déduit par démodulation par la fréquence testée, correspond à une constellation à nombre d'états petit, d'où une densité de probabilité "concentrée", mieux perçue dans la représentation tri-dimensionnelle de la figure 18.

Quand la fréquence testée est loin de la bonne valeur, la répartition des symboles a(k) correspondante est plus étalée suivant des cercles centrés sur l'origine (Figure 17, où l'échelle déforme les cercles en ellipses). La figure 19 le montre en vue tri-dimensionnelle.

Une fois la valeur de $\Delta f_o$ ainsi estimée, une démodulation 800 permet d'obtenir le train de symboles a(k) qui lui correspond. Cette démodulation consiste en une multiplication complexe du signal par une expression semblable à E3, où $f_1$ est remplacée par $-\Delta f_o$.

Il faut encore estimer les états possibles des symboles (stade 900).

Ce stade tient compte du fait que les symboles obtenus après démodulation correspondent aux vrais symboles, à nombre d'états finis, mais corrompus par le bruit de puissance $\sigma^2$, calculée précédemment, comme le montre la figure 16 qui correspond à un exemple de résultat obtenu. Les différentes valeurs des symboles a(k) trouvés sont déssinées dans le plan complexe. La figure 2D correspond à l'alphabet des symboles a(k) réellement émis pour cet exemple. La rotation de phase entre les deux figures ainsi que les échelles différentes, proviennent du fait que, tout étant inconnu au départ, il n'est possible de retrouver le train de symboles qu'à une constante complexe multiplicative près.

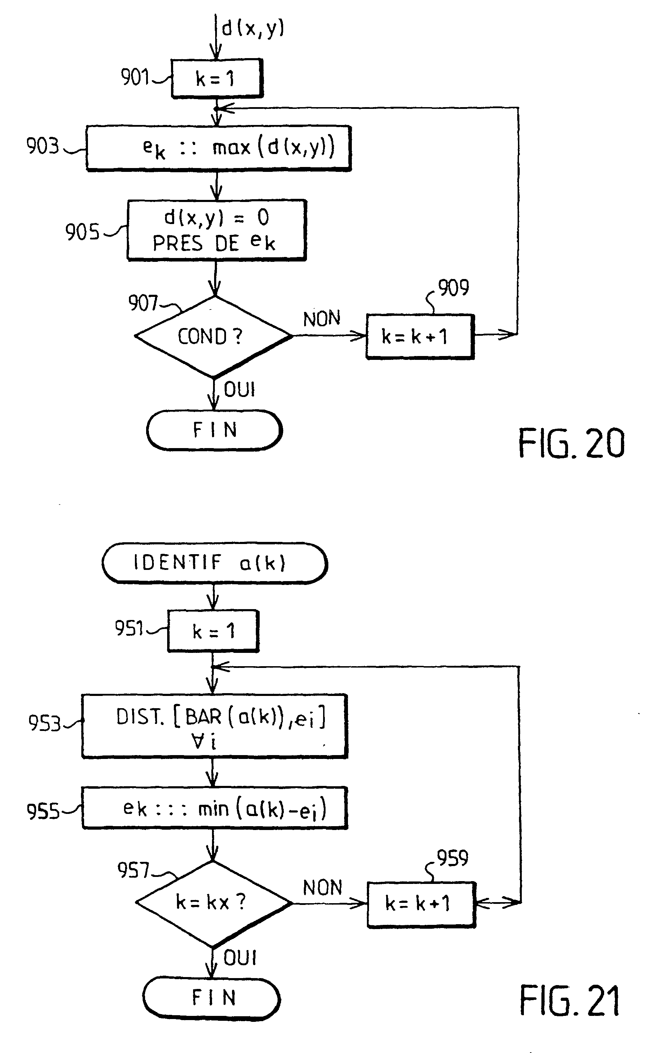

L'objectif de cette partie du traitement est d'estimer la position des états possibles. Le déroulement du traitement est le suivant (figure 20) :

- on estime le premier état possible $e_1$ comme la position en (x,y) du maximum de la densité de probabilité d(x,y) des symboles bruités,
- à partir de cette densité, on construit la fonction $d_2(x,y)$ correspondant à d(x,y), mais dont on force la valeur à zéro pour tous les points se trouvant dans un rayon de $3\sigma$ (par exemple) autour de $e_1$,
- on estime alors le deuxième état possible $e_2$ en prenant la position en (x,y) où la fonction $d_2$ est maximale,
- on continue ainsi le traitement jusqu'à ce que tous les états possibles soient traités.

Ceci peut se faire selon les étapes 901 à 909 de la figure 20. Parmi différentes possibilités, le critère d'arrêt de ce traitement (condition "COND" en 907), permettant de savoir si tous les états possibles ont été estimés, peut être celui de l'expression E86, où $\lambda$ est un seuil qu'on se fixe par avance ($0 < \lambda < 1$).

Le principe utilisé est le suivant. On suppose que les valeurs des symboles émis sont équiprobablement distribuées entre les différentes valeurs possibles de l'alphabet (on a à peu près le même nombre de symboles dans chacun des modes de la figure 18, par exemple). Les intégrales de densité de l'expression E86 sont proportionnelles aux nombres de symboles formant ces densités. Supposons qu'on ait estimé n - 1 états $e_1,..., e_{n-1}$. Le critère d'arrêt consiste à calculer une mesure du nombre moyen par état de symboles correspondant aux états $e_1,..., e_{n-1}$ (membre de droite de E86) et à comparer cette quantité à la mesure du nombre de symboles restants. Si cette dernière quantité est trop petite, c'est qu'il ne reste pas assez de symboles pour former un état supplémentaire. Ces symboles sont supposés être loins des états $e_1,..., e_n$ estimés, à cause des pics de bruit.

On peut maintenant procéder à l'estimation de la suite des symboles, tel qu'elle a été effectivement émise (stade 950).

Cette partie du traitement consiste, à partir du train de symboles bruités a(k) et des états possibles des symboles $e_1$, $e_2$,... calculés précédemment, à estimer, pour chaque symbole bruité a(k), l'état e(k) intentionnellement émis.

A cet effet, pour chaque symbole a(k), en partant de k = 1 (étape 951, figure 21) on recherche l'état possible $e_k$ le plus proche, par exemple (953) sur la base de la distance euclidienne (fonction DIST[]). On obtiendra ainsi, pour le rang k, un symbole noté e(k) prenant une des valeurs $e_i$ de l'alphabet estimé précédemment. Le minimum de distance est déterminé en 955 conformément à la relation E87, et l'on peut poursuivre en incrémentant k (959) jusqu'à la valeur maximum kx (957), en fait jusqu'à l'épuisement de tous les symboles bruités a(k) obtenus en 800.

Les traitements d'estimation des paramètres inconnus du modèle E1 du signal, dans l'hypothèse "modulation numérique linéaire", sont terminés. Il reste maintenant à vérifier que l'hypothèse de base est correcte, autrement dit à valider - ou non - l'hypothèse que l'on est en présence d'une modulation numérique linéaire (stade 990).

Les traitements précédents ont permis d'estimer les éléments rappelés en E91. On calcule maintenant la quantité définie par l'expression E92, et l'on compare cette quantité à un seuil correspondant à la puissance admissible du bruit. Cette puissance admissible correspond à la puissance du bruit $\sigma^2$ calculée dans la partie "calcul de $h_{pm}$ (520), multipliée par le rapport entre la fréquence d'échantillonnage du signal de départ et le rythme de la projection (q/T), et pondérée par un coefficient $\beta$ (0 < $\beta$ < 1) pour tenir compte des imperfections sur les estimations précédentes des paramètres. La valeur de $\beta$ est fixée par simulation.

En bref, quand le signal reçu correspond effectivement à une modulation numérique linéaire, la différence entre le signal reçu et la modulation numérique linéaire estimée doit être un signal correspondant à du bruit, d'une puissance faible ; par contre, quand le signal reçu n'est pas une modulation numérique linéaire, ladite différence n'est alors plus un signal de puissance faible pouvant être vu comme du bruit.

Les traitements décrits peuvent être mis en oeuvre sur un poste de travail du type PC Pentium, avec des outils logiciels propre à des traitements de calcul, comme le logiciel MATLAB. Les programmes préparés sous MATLAB peuvent être utilisés tels quels, ou mieux transformés en un langage de programmation plus rapide à l'exécution, comme le langage C. Des utilitaires de conversion de MATLAB en langage C sont disponibles par exemple chez les distributeurs du logiciel MATLAB.

Dans certains cas où il existe plusieurs signaux dans la bande de fréquence analysée, déterminables par analyse spectrale a priori, il peut être nécessaire de traiter le signal reçu par parties, à chacune desquelles on affectera une estimée propre de la fréquence porteuse.

La base de fonctions "rectangulaires" décrite plus haut n'est pas limitative. On peut recourir à d'autres jeux de fonctions qui satisfassent la condition de définir une base, non nécessairement orthonormée, à condition de tenir compte de la corrélation induite sur les coefficients de projection.

Il demeure particulièrement intéressant d'utiliser une base dont les fonctions se déduisent les unes des autres par décalage temporel. Cela autorise en effet une réalisation avantageuse de la projection sous forme de filtrage, suivi d'un échantillonnage. Cette possibilité vaut pour d'autres types de base de fonctions:

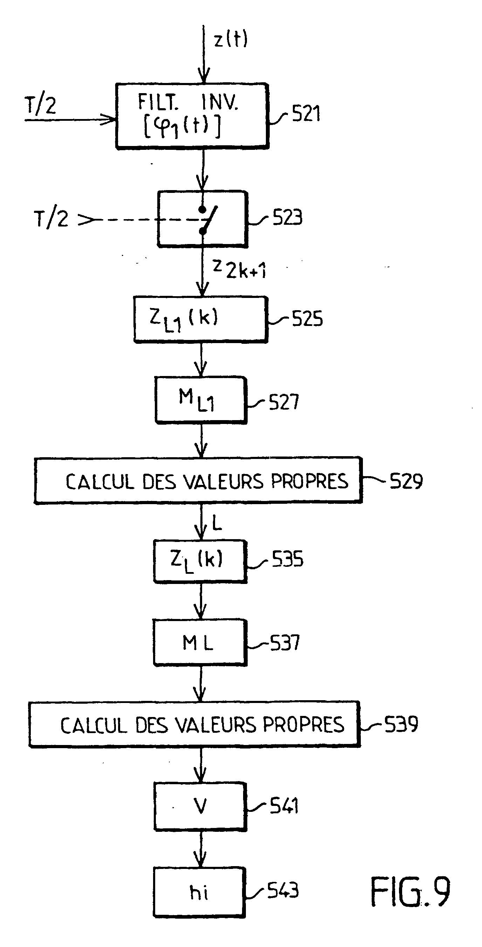

- si l'on prend par exemple pour $\varphi_1$ une fonction en cosinus surélevé de largeur spectrale 2/T, (les autres fonctions $\varphi_i$ en étant déduites comme précédemment), les spectres sont alors ceux de la figure 10B. L'homme du métier comprend que, du fait de la forme rectangulaire du spectre de $\varphi_1$, on perd encore moins de signal par la projection ;
- on peut aussi prendre la base de fonctions des relations E34 et E35. Ceci revient (Figure 10C) à filtrer le signal par la nouvelle fonction $\varphi_1(t)$ et à échantillonner tous les T/q (échantillonnage à q points par symboles, avec q > 2). Comme le montre la figure 11, comparativement à la figure 8C, l'approximation de $h_m(t)$ par sa projection $h_{pm}(t)$ dans cette « base » est meilleure.

Il a été proposé plus haut un traitement par matrices de covariance entrelacées, appliqué à la base de fonctions des relations E25 et E26. Ce traitement demeure applicable avec toute base de fonctions pour laquelle la projection peut être interprétée comme un filtrage suivi d'un échantillonnage tous les T/2 (c'est-à-dire à 2 points par symboles).

Par contre, lorsque la projection correspond à un filtrage suivi d'un échantillonnage à plus de deux points par symboles, la Demanderesse prévoit une autre version dudit traitement, que l'on décrira maintenant, en notant q le nombre de points par symboles, avec q > 2 (ou q = 2).

Après projection, les nouvelles mesures z(k) (coefficients de projection du signal) se modélisent sous la forme des relations E50. On définit les vecteurs $Z_{L_1}(k)$ selon la relation E51 (comme E41, mais avec q à la place de 2).

La matrice $M_{L_1}$ peut être formée et traitée comme précédemment. Elle est donnée par l'expression E52. Cette matrice $M_{L_1}$ possède pour les mêmes raisons que précédemment $p.L_1$ valeurs propres dont $L + L_1 - 1$ sont non nulles. La répartition des valeurs propres est celle de la figure 13. La cassure du diagramme permet ici aussi d'estimer la longueur L (en nombre de T) de la fonction $h_{pm}(t)$.

C'est ensuite qu'intervient la différence : si, comme précédemment, connaissant L, on calculait la matrice $M_L$, il s'avérerait que celle-ci, au lieu d'une seule valeur propre nulle, aurait $q.L - (2.L - 1)$ valeurs propres nulles ($p.L$ valeurs propres en tout, dont $2L - 1$ non nulles, suivant le raisonnement donné plus haut). Quand q = 2, on a $2L - (2L -1) = 1$ valeur propre nulle. De l'unique vecteur propre associé à cette valeur propre, on en déduit $h_{pm}(t)$. Quand q > 2, il existe plusieurs vecteurs propres associés aux valeurs propres nulles. Il n'est alors plus possible d'en déduire $h_{pm}(t)$ d'une manière simple.

Pour estimer les coefficients de $h_{pm}(t)$, la Demanderesse prévoit alors de calculer et d'utiliser les vecteurs propres $V_i$, de $V_{L1 + L}$ à $V_{q.L1}$, associés aux valeurs propres nulles de la matrice $M_{L1}$. Les $q.L_1$ composantes d'un tel vecteur (d'indice i) sont notées de la façon indiquée en E55, avec $i \in \{L_1 + L, ...., p.L_1\}$.

On forme alors les matrices $P_i$ définies en E56. Il s'agit de matrices rectangulaires de dimension $q.L * q(L_1 + L)-1$, formées de la même façon que la matrice H permettant de générer le filtre inverse à $h_{pm}(t)$. Chaque colonne d'une telle matrice possède $q.L$ composantes. La première colonne est obtenue en prenant les q dernières composantes du vecteur $V_i$ considéré, et en complétant avec des zéros. Pour le reste, chaque colonne se déduit de la précédente par un décalage de q cases vers le bas, en complétant en haut par les composantes de $V_i$ dans l'ordre, puis par des zéros lorsque ces composantes sont épuisées. Ainsi, à la seconde colonne, on prend q composantes de plus vers le haut, et ainsi de suite jusqu'à la colonne remplie complètement avec des zéros et les q premières composantes de $V_i$. Le nombre de lignes des matrices $P_i$ étant fixé à $q.L$, on obtient $L1 + L - 1$ colonnes.

On forme ensuite la matrice G définie par l'expression E57. Elle peut être considérée comme une forme approchée d'une matrice dite "de projection dans l'espace bruit".

On recherche les valeurs propres de la matrice G, puis le vecteur propre associé à la valeur propre la plus faible. Les composantes de ce vecteur propre sont, dans l'ordre, les composantes recherchées de $h_{pm}(t)$ dans la base de fonctions considérée.

En effet, 1a Demanderesse a montré que cette matrice a une seule valeur propre nulle (hors bruit), et que le vecteur propre associé à cette valeur propre obéit à la relation E58.

La puissance $\sigma^2$ du bruit est dans ce cas estimée en prenant la moyenne des valeurs propres presque nulles, divisée par L1. L'estimation du train de symboles $c_m(k)$ à partir de $z_p(t)$ et $h_{pm}(t)$ se fait, elle, de la même manière avec q > 2, qu'avec q = 2, en construisant la matrice H conformément à l'expression E63 en prenant la valeur q utilisée.

Ce procédé est préférentiel dans le cas où l'on a plus de 2 points par symboles (q > 2). Il peut aussi être appliqué dans le cas où q = 2. On estime dans ce cas $h_{pm}(t)$ directement à partir de $M_{L1}$ sans passer par $M_L$.

L'invention n'est pas limitée aux modes de réalisation décrits.

Pour certaines applications, il peut être avantageux d'affiner l'estimation approchée $f_a$ de la fréquence porteuse $f_0$. Différentes techniques sont disponibles à cet effet. On peut par exemple estimer $f_a$ en recherchant la fréquence, qui après démodulation du signal par celle-ci, minimise la bande quadratique du signal. Si l'on parvient à rendre négligeable l'écart résiduel, alors le stade d'estimation de $\Delta f_o$ et la démodulation qui lui fait suite deviennent sans objet.

On notera que le signal de départ capté et enregistré n'est pas toujours assimilable au signal effectivement émis, dont il peut différer pour diverses raisons, par exemple des trajets multiples de propagation. Il peut en résulter des aménagements de certains stades du traitement. Les trajets multiples, que l'on peut voir de façon imagée comme des échos, modifient la forme de la fonction g(t) et plus particulièrement augmentent sa longueur. La modification de la forme ne change pas l'algorithme puisque celui-ci estime cette forme sans a priori. Il faut par contre augmenter les bornes supérieures L1 et N des longueurs de $h_{pm}$ et $\alpha_i$. Ces grandeurs paramétrables dans l'algorithme sont à fixer selon la longueur maximale des échos supposés.

L'invention a été définie essentiellement en référence à la modulation numérique linéaire. Elle peut s'étendre à d'autres types de modulation auxquels les stades de traitement proposés conviendraient, au moins en partie. C'est notamment le cas pour des types de modulation apparentés, comme la modulation numérique de fréquence à phase continue, entre autres codages par saut de fréquence (ou FSK, pour "Frequency Shift Keying"). L'homme du métier comprendra que, dans ce cas, la modélisation de la fréquence instantanée répond à une expression proche de la formule E10 en remplaçant $\Delta f_0$ par zéro. Tous les paramètres dans E10 sont dans ce cas des nombres réels.

ANNEXES

$$r(t) = \text{Re}\left[\sum_k a(k)g(t-kT)e^{j2\pi f_0 t}\right] = \text{Re}[z(t)] \tag{E1}$$

$$p(t) \to p(t)e^{j2\pi f_1 t} \tag{E2}$$

$$e^{j2\pi f_1 t} \tag{E3}$$

$$x(t) = z(t)z^*(t-\tau) \quad (\tau \text{ petit}) \tag{E4}$$

$$X(f) \quad \to \quad X_1(f) = \frac{X(f)}{\text{moyenne}\left(|X(f_i)|\right)} \tag{E5}$$
$$f_i \in [f - \Delta f_i, f + \Delta f_i]$$

$$z(t) = \sum_k a(k)g(t-kT)e^{j2\pi\Delta f_0 t} \tag{E10}$$

$$z(t) = \sum_k \left(a(k)e^{j2\pi\Delta f_0 kT}\right)\left(g(t-kT)e^{j2\pi\Delta f_0(t-kT)}\right) \tag{E11}$$

$$g_m(t) = g(t)e^{j2\pi\Delta f_0 t} \tag{E12}$$

$$a_m(k) = a(k)e^{j2\pi\Delta f_0 kT} \tag{E13}$$

$$z(t) = \sum_k a_m(k)g_m(t-kT) \tag{E14}$$

$$\left(a_m(k), g_m(t)\right) \tag{E15}$$

$$\sum_k c_m(k)h_m(t-kT) = \sum_k a_m(k)g_m(t-kT) \tag{E18}$$

$$z(t) = \sum_k c_m(k) h_m(t - kT) \tag{E20}$$

$$g_m(t) = \sum_{i=0}^{n} \alpha_i h_m(t - iT) \tag{E21}$$

$$\begin{cases} z(t) = \sum_k c_m(k) h_m(t - kT) \\ c_m(k) = \sum_{i=1}^{n} \alpha_i a_m(k - i) \end{cases} \tag{E22} \tag{E23}$$

$$\begin{cases} \varphi_1(t) = \operatorname*{rect}_{\left[0, \frac{T}{2}\right[}(t) \\ \forall i \in \{1, ..b\} \quad \varphi_i(t) = \operatorname*{rect}_{\left[(i-1)\frac{T}{2}, i\frac{T}{2}\right[}(t) = \varphi_1\left(t - (i-1)\frac{T}{2}\right) \end{cases} \tag{E25} \tag{E26}$$

$$\begin{cases} z_p(t) = \sum_k c_m(k) h_{pm}(t - kT) \\ c_m(k) = \sum_{i=1}^{n} \alpha_i a_m(k - i) \end{cases} \tag{E30}$$

$$\begin{cases} \varphi_1(t) = \operatorname*{rect}_{\left[0, \frac{T}{q}\right[}(t) \quad q \in \mathbb{N} \setminus \{0,1\} \\ \forall_i \in \{1, ..b\} \quad \varphi_i(t) = \operatorname*{rect}_{\left[(i-1)\frac{T}{q}, i\frac{T}{q}\right[}(t) \end{cases} \tag{E34} \tag{E35}$$

$$z_p(t) = \sum_k z(k) \cdot \varphi_1\left(t - (k-1)\frac{T}{2}\right) \tag{E36}$$

$$h_{pm}(t) = h_1 \cdot \varphi_1(t) + h_2 \cdot \varphi_1\left(t - \frac{T}{2}\right) + \dots h_{2L} \cdot \varphi_1\left(t - (2L-1)\frac{T}{2}\right) \tag{E37}$$

$$\forall k \begin{cases} z(2k+1) = c_m(k)h_1 + c_m(k-1)h_3 + \ldots + c_m(k-L+1)h_{2L-1} \\ z(2k+2) = c_m(k)h_2 + c_m(k-1)h_4 + \ldots + c_m(k-L+1)h_{2L} \end{cases} \tag{E38}$$

$$Z_{L_1}(k) = \begin{bmatrix} z(2k+1) \\ z(2k+2) \\ \cdot \\ \cdot \\ \cdot \\ \cdot \\ z(2k+2L_1-1) \\ z(2k+2L_1) \end{bmatrix} \tag{E41}$$

$$\underset{(2L_1 \times 2L_1)}{M_{L_1}} = \sum_k Z_{L_1}(k) \cdot Z_{L_1}^*(k) \tag{E42}$$

$$\underset{(2L \times 2L)}{M_L} = \sum_k Z_L(k) \cdot Z_L^*(k) \tag{E43}$$

$$Z_L(k) = \begin{bmatrix} z(2k+1) \\ z(2k+2) \\ \cdot \\ \cdot \\ \cdot \\ \cdot \\ z(2k+2L-1) \\ z(2k+2L) \end{bmatrix} \tag{E44}$$

$$V = \begin{bmatrix} +h_{2L}^* \\ -h_{2L-1}^* \\ . \\ . \\ . \\ . \\ +h_2^* \\ -h_1^* \end{bmatrix} \qquad \text{(E45)}$$

$$\forall k \; z_{L_1,k}(t) = \begin{aligned}[t] & c_m(k-L+1) . Z_1(t) \\ + & c_m(k-L+2) . Z_2(t) \\ + & \quad ...... \\ + & c_m(k) \quad . \quad Z_L(t) \\ + & \quad ...... \\ + & c_m(k+L_1) . Z_{L+L_1-1}(t) \end{aligned} \qquad \text{(E47)}$$

$$Z_1(t) = h_{pm}(t-(-L+1)T) . \underset{[0,L_1 T[}{\text{rect}(t)}$$

$$Z_2(t) = h_{pm}(t-(-L+2)T) . \underset{[0,L_1 T[}{\text{rect}(t)}$$

$$......$$

$$Z_L(t) = h_{pm}(t) \quad . \quad \underset{[0,L_1 T[}{\text{rect}(t)} \qquad \text{(E48)}$$

$$......$$

$$Z_{L+L_1-1}(t) = h_{pm}(t-L_1 T) . \underset{[0,L_1 T[}{\text{rect}(t)}$$

$$\forall k \begin{cases} z(qk+1) = c_m(k)h_1 + c_m(k-1)h_{q+1} + \ldots c_m(k-L+1)h_{(q-1)L+1} \\ z(qk+2) = c_m(k)h_2 + c_m(k-1)h_{q+2} + \ldots c_m(k-L+1)h_{(q-1)L+2} \\ \ldots\ldots\ldots\ldots \\ z(qk+q) = c_m(k)h_q + c_m(k-1)h_{q+q} + \ldots c_m(k-L+1)h_{qL} \end{cases} \quad \text{(E50)}$$

$$Z_{L_1}(k) = \begin{bmatrix} z(qk+1) \\ \cdot \\ \cdot \\ \cdot \\ \cdot \\ \cdot \\ \cdot \\ z(qk+qL_1) \end{bmatrix} \quad \text{(E51)}$$

$$\underset{(q.L_1 \times q.L_1)}{M_{L_1}} = \sum_k Z_{L_1}(k).Z_{L_1}^*(k) \quad \text{(E52)}$$

$$\underset{(q.L_1 \times 1)}{V_i} \approx \begin{bmatrix} v_i(1) \\ \cdot \\ \cdot \\ v_i(q.L_1) \end{bmatrix} \quad i \in \{L_1 + L, \ldots, qL_1\} \quad \text{(E55)}$$

$$P_i \atop \left(q.L \times q.(L_1 + L) - 1\right) =$$

$$\begin{bmatrix} \begin{bmatrix} v_i(qL_1 - q + 1) \\ \cdot \\ \cdot \\ v_i(qL_1) \end{bmatrix} & \begin{bmatrix} v_i(qL_1 - 2q + 1) \\ \cdot \\ \cdot \\ \cdot \\ \cdot \\ \cdot \\ v_i(qL_1) \end{bmatrix} & \cdot & \cdot & 0 & 0 \\ & & \cdot & \cdot & & \\ 0 & & \cdot & \cdot & \begin{bmatrix} v_i(1) \\ \cdot \\ \cdot \\ \cdot \\ \cdot \\ \cdot \\ v_i(qL_1 - q) \end{bmatrix} & 0 \\ & & \cdot & \cdot & & \begin{bmatrix} v_i(1) \\ \cdot \\ \cdot \\ v_i(q) \end{bmatrix} \\ 0 & 0 & \cdot & \cdot & & \end{bmatrix}$$

(E56)

$$G = \sum_i P_i . P_i^*$$

(E57)

$$h_{pm} \atop (q.L \times 1) = \begin{bmatrix} h_1 \\ h_2 \\ \cdot \\ \cdot \\ \cdot \\ h_{q.L} \end{bmatrix}$$

(E58)

$$H = \begin{pmatrix} q.Lx(2L-1) \end{pmatrix} \begin{bmatrix} h((L-1).q+1) & h((L-2).q+1) & \cdot & \cdot \\ \cdot & \cdot & \cdot & \cdot \\ \cdot & \cdot & \cdot & \cdot \\ \cdot & \cdot & \cdot & \cdot \\ h(L.q) & h((L-1).q) & \cdot & \cdot \\ 0 & \cdot & \cdot & \cdot \\ \cdot & & \cdot & \cdot \\ \cdot & h(L.q) & \cdot & \cdot \\ \cdot & \cdot & \cdot & h(1) \\ \cdot & \cdot & \cdot & \cdot \\ \cdot & \cdot & \cdot & \cdot \\ \cdot & \cdot & \cdot & \cdot \\ 0 & \cdot & \cdot & h(q) \end{bmatrix} \tag{E63}$$

$$\begin{matrix} \left( H^*.H \right)^{-1} H^* \\ \left[ (2L-1) \times qL \right] \end{matrix} \tag{E64}$$

$$E\left( a(k) a(k+p)^* \right) \approx \sum_k a(k) a(k+p)^* = \left| \begin{matrix} 1 & \text{pour } p=0 \\ 0 & \text{ailleurs} \end{matrix} \right. \tag{E70}$$

$$P(Z) = \sum_{i=0}^{N} \alpha_i Z^{-i} \tag{E71}$$

$$P_2(Z) = P(Z).P^*(Z) = \left( \sum_{i=0}^{N} \alpha_i Z^{-i} \right) \left( \sum_{j=0}^{N} \alpha_j^* Z^{+j} \right) \tag{E72}$$

$$Q(Z) = \sum_{r=-N}^{r=+N} \left( \sum_K \left[ c_m(k) c_m^*(k+r) \right] \right) Z^{-r} \tag{E73}$$

$$P(Z) = K_1 . \prod_{i=1}^{N} \left( 1 - \beta_i Z^{-i} \right) \tag{E75}$$

$$P_2(Z) = K_1 . K_1^* \prod_{i=1}^{N} \left(1 - \beta_i Z^{-i}\right)\left(1 - \beta_i^* Z^{-i}\right) \tag{E76}$$

$$V = \frac{1}{nb} \sum_k \left[ \left|a_m(k)\right| - \frac{1}{nb} \sum_k \left|a_m(k)\right| \right]^2 \tag{E80}$$

$$E = \left(a(k)\,a(k+p)^*\right) = \left| \begin{array}{l} \lambda_p \quad \text{quelconque pour } -e \le p \le e \qquad (e \in \mathbb{N}\text{ et petit}) \\ 0 \quad \text{ailleurs} \end{array} \right. \tag{E81}$$

avec e entier pas trop grand

$$d(x,y) = \frac{1}{kx} \sum_{k=1}^{kx} \frac{1}{\sigma} \frac{1}{\sqrt{2\Pi}} e^{-\frac{|x+jy-a(k)|^2}{2\sigma^2}} \tag{E82}$$

σ est une constante dont on a fixé la valeur par simulation

$$d(x,y) = \frac{1}{nb} \sum_{k=1}^{nb} \frac{1}{\sigma} \frac{1}{\sqrt{2\Pi}} e^{-\frac{|x+jy-a(k)|^2}{2\sigma^2}} \tag{E82}$$

$$\int_{x,y} d^2(x,y)\,dx\,dy \tag{E85}$$

$$\int d_n(x,y)\,dx\,dy < \frac{1}{n-1}\left(\int d(x,y)\,dx\,dy - \int d_n(x,y)\,dx\,dy\right).\lambda \tag{E86}$$

$$e(k) = \overset{\text{Min}}{e_i}\left(\left\|a_{(k)} - e_i\right\|^2\right) \tag{E87}$$

$e_i \in \{e_1, e_2, \dots\}$ ensemble estimé en 900

$$\begin{cases} z(t) = \sum_k e_k\, g(t - kT) e^{j2\pi f_o t} \\[2ex] (e_k) \text{ est le train de symboles estimés} \\[2ex] \dfrac{1}{T} \text{ est le rythme estimé} \\[2ex] g(t) \equiv \left( \sum_i \alpha_i\, h_{pm}(t - iT) \right) e^{j2\pi f_o t} \\[2ex] h_{pm} \text{ est la fonction de support le plus petit, estimée} \\[2ex] (\alpha_i) \text{ est le résidu de filtrage estimé} \\[2ex] f_0 = f_i + \Delta f_0 \text{ est la porteuse estimée} \end{cases} \qquad \text{(E91)}$$

$$\frac{1}{b/2} \int_o^{b/2\,T} \left\| r(t) - z(t) \right\|^2 dt \qquad \text{(E92)}$$

## Revendications

1. Dispositif d'aide à l'analyse de signaux contenant une modulation numérique linéaire par des symboles, ce dispositif comprenant:

   - une mémoire de signal (100), pour stocker un signal numérique complexe (z(t)), représentatif en amplitude et phase d'un signal capté, sur une durée choisie, et
   - des moyens de traitement (200-900), agencés pour rechercher dans le signal complexe des propriétés relatives à sa fréquence porteuse et à la modulation de celle-ci, en particulier en fonction d'un modèle de modulation choisi, les moyens de traitement comprenant des moyens (200) pour déterminer une estimée du rythme (1/T) de la modulation, et
   - des moyens propres à déterminer (300) une estimée approchée $f_a$ de la porteuse $f_0$ du signal complexe, et à démoduler (400) le signal complexe par cette estimée approchée de la porteuse, **caractérisé en ce que** les moyens de traitement comprennent en outre:

     - des moyens de projection (510), propres à calculer les composantes ($z_p(t)$) du signal complexe (z(t)), après sa démodulation par l'estimée approchée de la porteuse, dans une base de fonctions (501;$\varphi_i(t)$), la base de fonctions étant paramétrée selon le rythme (1/T) de la modulation, et
     - des moyens de calcul (520, 620) d'une estimée de la forme d'impulsion élémentaire du signal complexe (g(t)), opérant sur les composantes du signal complexe ($z_p(t)$)pour calculer une estimée de la forme d'impulsion élémentaire modulée (gm(t)) sous la forme d'une forme d'impulsion de support minimal ($h_{pm}(t)$), et d'un résidu de filtrage ($\alpha i$), la forme d'impulsion de support minimal étant associée à un train de symboles

$(c_m(k))$,

- des moyens de calcul d'une estimée de la suite des symboles $(a(k))$ du signal complexe (650, 660, 800, 900, 950) propres à engendrer un filtrage inverse du résidu de filtrage, puis à appliquer (660) ce filtrage inverse au train de symboles $(c_m(k))$ associé à la forme d'impulsion de support minimal, ce qui fournit un ensemble de trains de symboles modulés $(a_m(k))$.

2. Dispositif selon la revendication 1, **caractérisé en ce que** ladite base de fonctions (501) est paramétrée pour présenter au moins deux échantillons par période (T) de la modulation ($q \geq 2$).

3. Dispositif selon la revendication 2, **caractérisé en ce que** ladite base de fonctions (501) comprend au moins deux fonctions $(\varphi_1(t), \varphi_b(t))$ se déduisant l'une de l'autre par une translation temporelle de période choisie (T/2;T/q, $q \geq 2$).

4. Dispositif selon l'une des revendications 1 à 3, **caractérisé en ce que** ladite base de fonctions (501) comprend des fonctions rectangulaires temporellement adjacentes les unes aux autres.

5. Dispositif selon l'une des revendications 1 à 3, **caractérisé en ce que** ladite base de fonctions (501) comprend des fonctions du type "cosinus surélevé".

6. Dispositif selon l'une des revendications 1 à 5, **caractérisé en ce que** les moyens de projection (520) comprennent:

- des moyens (521) définissant un filtre numérique, ayant une réponse impulsionnelle sensiblement égale à l'une desdites fonctions, ce filtre numérique recevant le signal complexe, et
- des moyens (523) d'échantillonnage numérique répété de la sortie de ce filtre à une cadence choisie (2/T;q/T).

7. Dispositif selon l'une des revendications 1 à 6, **caractérisé en ce que** la base de fonctions (501) est de basse fréquence, comme le spectre du signal complexe après démodulation.

8. Dispositif selon l'une des revendications 1 à 7, **caractérisé en ce que** les moyens de calcul (520, 620) d'une estimée de la forme d'impulsion élémentaire du signal complexe comprennent des moyens de calcul matriciel sur les composantes du signal complexe démodulé.

9. Dispositif selon l'une des revendications précédentes, **caractérisé en ce que** les moyens de calcul (520, 620) d'une estimée de la forme d'impulsion élémentaire du signal complexe sont agencés pour déterminer une représentation d'un sous-espace de dimension minimale de l'espace de fonctions, sous-espace qui contient ledit signal complexe, et pour rechercher dans ce sous-espace une direction orthogonale à chacune des tranches du signal complexe, les composantes du vecteur propre (V) associé à cette direction étant représentatives de ladite forme d'impulsion de support minimal (hpm(t)).

10. Dispositif selon l'une des revendications précédentes, **caractérisé en ce que** les moyens de calcul (520, 620) d'une estimée de la forme d'impulsion élémentaire sont agencés pour déterminer en outre le train de symboles $(c_m(k))$ associé à ladite forme d'impulsion de support minimal.

11. Dispositif selon la revendication 10, **caractérisé en ce que** les moyens de calcul (520, 620) d'une estimée de la forme d'impulsion élémentaire du signal complexe sont aptes à engendrer un filtrage inverse de la forme d'impulsion de support minimal, puis à appliquer ce filtrage inverse aux composantes du signal complexe dans ladite base de fonctions, ce qui fournit ledit train de symboles $(c_m(k))$ associé à la forme d'impulsion de support minimal.

12. Dispositif selon l'une des revendications précédentes, **caractérisé en ce que** les moyens de calcul d'une estimée de la suite des symboles $(a(k))$ du signal complexe (650, 660) sont aptes à effectuer une résolution polynômiale (650) sur le train de symboles $(c_m(k))$ associé à la forme d'impulsion de support minimal, avec des moyens (659) pour déterminer le résidu de filtrage ($\alpha i$).

13. Dispositif selon l'une des revendications précédentes, **caractérisé en ce que** les moyens de calcul d'une estimée de la suite des symboles $(a(k))$ du signal complexe (650, 660) sont en outre aptes à sélectionner un train de symboles qui répond à des contraintes choisies parmi l'ensemble de train de symboles modulés $(a_m(k))$.

14. Dispositif selon la revendication 13, **caractérisé en ce que** les contraintes choisies (659) sont la décorrélation des symboles et la minimisation de la variance du module des symboles.

**15.** Dispositif selon l'une des revendications 10 à 14, **caractérisé en ce que** les moyens de traitement comprennent des moyens de calcul d'une correction de porteuse (700) aptes à déterminer une correction ($\Delta f_o$) de l'estimation initiale ($f_a$) de la porteuse, par recherche d'une fréquence de démodulation qui conduise à une densité de probabilité à entropie minimale.

**16.** Dispositif selon l'une des revendications 13 à 15, **caractérisé en ce que** les moyens de calcul d'une estimée de la suite des symboles sont propres (800) à produire une démodulation (a(k)) du train de symboles sélectionné ($a_m$(k)) par la correction ($\Delta f_o$) de l'estimation approchée de la porteuse.

**17.** Dispositif selon la revendication 16, **caractérisé en ce que** les moyens de calcul d'une estimée de la suite des symboles sont en outre aptes à estimer (900,950) l'ensemble des états possibles ($e_i$) des symboles (a(k)) issus de la démodulation du train de symboles sélectionné.

**18.** Dispositif selon la revendication 17, **caractérisé en ce que** l'ensemble des états possibles ($e_i$) des symboles (a(k)) issus de la démodulation du train de symboles sélectionné est obtenu par recherche de maxima locaux de la densité de probabilité des symboles.

**19.** Dispositif selon la revendication 7, **caractérisé en ce que** les moyens de calcul d'une estimée de la suite des symboles sont propres à déterminer (950), pour chaque symbole (a(k)) issu de la démodulation du train de symboles sélectionné pris individuellement, l'état possible le plus proche parmi l'ensemble des états possibles ($e_i$) estimé, ce qui fournit un ensemble de symboles estimés ({e(k)}).

**20.** Dispositif selon la revendication 19, **caractérisé en ce qu'**il comprend des moyens (990) pour reconstruire localement un signal ayant la porteuse (fo), la modulation définit par la forme d'impulsion élémentaire (g(t)), et les symboles estimés ({e(k)}), et pour comparer ce signal local au signal initial, tel que mémorisé.

## Claims

**1.** Device for aiding the analysis of signals containing a symbol-based linear digital modulation, this device comprising:

- a signal memory (100), for storing a complex digital signal (z(t)), representative in amplitude and phase of a captured signal, over a chosen duration, and
- processing means (200-900), devised to search within the complex signal for the properties relating to its carrier frequency and to the modulation of the latter, in particular as a function of a chosen modulation model, the processing means comprising means (200) for determining an estimate of the tempo (1/T) of the modulation,

**characterized in that** the processing means furthermore comprise:

- means able to determine (300) an approximate estimate $f_a$ of the carrier $f_0$ of the complex signal, and to demodulate (400) the complex signal by this approximate estimate of the carrier,
- projection means (510), able to calculate the components ($z_p$(t)) of the complex signal (z(t)), after its demodulation by the approximate estimate of the carrier, in a function basis (501; $\phi$ (t)), the function basis being parametrized according to the tempo (1/T) of the modulation , and
- means (520, 620) for calculating an estimate of the elementary pulse shape of the complex signal (g(t)), operating on the components of the complex signal ($z_p$(t)) so as to calculate an estimate of the modulated elementary pulse shape ($gm$(t)) in the form of a pulse shape of minimal support ($h_{mp}$(t)), and of a filtering residual ($\alpha i$), the pulse shape of minimal support being associated with a train of symbols ($c_m$(k)),
- means of calculating an estimate of the string of symbols (a(k)) of the complex signal (650, 660, 800, 900, 950) able to effect an inverse filtering of the filtering residual, then to apply (660) this inverse filtering to the train of symbols ($c_m$(k)) associated with the pulse shape of minimal support, thereby providing a set of modulated symbol trains ($a_m$(k)).

**2.** Device according to Claim 1, **characterized in that** the said function basis (501) is parametrized so as to exhibit at least two samples per period (T) of the modulation (q $\geq$ 2).

**3.** Device according to Claim 2, **characterized in that** the said function basis (501) comprises at least two functions

$(\varphi_1(t), \varphi_b(t))$ which are deduced from one another by a temporal translation of chosen period (T/2; T/q, q ≥ 2).

4. Device according to one of Claims 1 to 3, **characterized in that** the said function basis (501) comprises rectangular functions which are temporally adjacent to one another.

5. Device according to one of Claims 1 to 3, **characterized in that** the said function basis (501) comprises functions of the "raised cosine" type.

6. Device according to one of Claims 1 to 5, **characterized in that** the projection means (520) comprise:

   - means (521) defining a digital filter, having an impulse response substantially equal to one of the said functions, this digital filter receiving the complex signal, and
   - means (523) for repeated digital sampling of the output of this filter at a chosen rate (2/T; q/T).

7. Device according to one of Claims 1 to 6, **characterized in that** the function basis (501) is of low frequency, like the spectrum of the complex signal after demodulation.

8. Device according to one of Claims 1 to 7, **characterized in that** the means (520, 620) for calculating an estimate of the elementary pulse shape of the complex signal comprise means of matrix calculation on the components of the demodulated complex signal.

9. Device according to one of preceding claims, **characterized in that** the means (520, 620) of calculating an estimate of the elementary pulse shape of the complex signal are devised so as to determine a representation of a subspace of minimal dimension of the function space, which subspace contains the said complex signal, and to search within this subspace for a direction orthogonal to each of the slices of the complex signal, the components of the eigenvector (V) associated with this direction being representative of the said pulse shape of minimal support (hpm(t)).

10. Device according to any one of the preceding claims, **characterized in that** the means (520, 620) of calculating an estimate of the elementary pulse shape are devised so as to furthermore determine the symbol train $(c_m(k))$ associated with the said pulse shape of minimal support.

11. Device according to Claim 10, **characterized in that** the means (520, 620) of calculating an estimate of the elementary pulse shape of the complex signal are able to effect an inverse filtering of the pulse shape of minimal support, then to apply this inverse filtering to the components of the complex signal in said function basis, thereby providing said symbol train $(c_m(k))$ associated with the pulse shape of minimal support.

12. Device according to one of the preceding claims, **characterized in that** the means of calculating an estimate of the string of symbols (a(k)) of the complex signal (650, 660) are able to perform a polynomial resolution (650) over the train of symbols $(c_m(k))$ associated with the pulse shape of minimal support, with means (659) for determining the filtering residual $(\alpha i)$.

13. Device according to one of the preceding claims, **characterized in that** the means of calculating an estimate of the string of symbols (a(k)) of the complex signal (650, 660) are furthermore able to select a train of symbols which meets chosen constraints from the whole train of modulated symbols $(a_m(k))$.

14. Device according to Claim 13, **characterized in that** the chosen constraints (659) are the decorrelation of the symbols and the minimization of the variance of the modulus of the symbols.

15. Device according to one of Claims 10 to 14, **characterized in that** the processing means comprise means for calculating a carrier correction (700) that are able to determine a correction $(\Delta f_0)$ of the initial estimation $(f_a)$ of the carrier, by searching for a frequency of demodulation of the residual which leads to a probability density with minimum entropy.

16. Device according to one of Claims 13 to 15, **characterized in that** the means of calculating an estimate of the string of symbols are able (800) to produce a demodulation (a(k)) of the selected symbol train $(a_m(k))$ by the correction $(\Delta f_0)$ of the approximate estimation of the carrier.

17. Device according to Claim 16, **characterized in that** the means of calculating an estimate of the string of symbols are further able to estimate (900, 950) the whole set of possible states ($e_i$) of the symbols ($a(k)$) arising from the demodulation of the selected symbol train.

18. Device according to Claim 17, **characterized in that** the whole set of possible states ($e_i$) of the symbols ($a(k)$) arising from the demodulation of the selected symbol train is obtained by searching for the local maxima of the probability density of the symbols.

19. Device according to Claim 7, **characterized in that** the means of calculating an estimate of the string of symbols are able to determine (950), for each symbol ($a(k)$) arising from the demodulation of the selected symbol train taken individually, the closest possible state from among the whole estimated set of possible states ($e_i$), thereby providing a set of estimated symbols ($\{e(k)\}$).

20. Device according to Claim 19, **characterized in that** it comprises means (990) for locally reconstructing a signal having the carrier (fo), the modulation defined by the elementary pulse shape ($g(t)$), and the estimated symbols ($\{e(k)\}$), and for comparing this local signal with the initial signal, as stored.

**Patentansprüche**

1. Vorrichtung zur Unterstützung der Analyse von Signalen, die eine lineare digitale Modulation durch Symbole enthalten, wobei diese Vorrichtung aufweist:

   - einen Signalspeicher (100) zum Speichern eines komplexen digitalen Signals ($z(t)$) während einer gewählten Dauer, das in Amplitude und Phase für ein erfasstes Signal repräsentativ ist, und
   - Verarbeitungsmittel (200-900), die ausgelegt sind, um im komplexen Signal Eigenschaften betreffend seine Trägerfrequenz und deren Modulation zu ermitteln, insbesondere in Abhängigkeit von einem gewählten Modulationsmodell, wobei die Verarbeitungsmittel Mittel (200) aufweisen, um einen Schätzwert des Takts (1/T) der Modulation zu bestimmen, und
   - Mittel, die geeignet sind, um einen angenäherten Schätzwert $f_a$ der Trägerfrequenz $f_0$ des komplexen Signals zu bestimmen (300) und das komplexe Signal aufgrund dieses angenäherten Schätzwerts der Trägerfrequenz zu demodulieren (400),

   **dadurch gekennzeichnet, dass** die Verarbeitungsmittel weiter aufweisen:

   - Projektionsmittel (510), die in der Lage sind, die Komponenten ($z_p(t)$) des komplexen Signals ($z(t)$) nach seiner Demodulation durch den angenäherten Schätzwert der Trägerfrequenz in einer Funktionsbasis (501;$\varphi_i(t)$) zu berechnen, wobei die Funktionsbasis gemäß dem Takt (1/T) der Modulation parametriert wird, und
   - Mittel (520, 620) zur Berechnung eines Schätzwerts der elementaren Impulsform des komplexen Signals ($g(t)$) durch Einwirken auf die Komponenten des komplexen Signals ($z_p(t)$), um einen Schätzwert der modulierten elementaren Impulsform ($gm(t)$) in Form einer Impulsform minimaler Unterstützung ($h_{pm}(t)$) und eines Filterungsrests ($\alpha i$) zu berechnen, wobei die Impulsform minimaler Unterstützung einer Symbolfolge ($c_m(k)$) zugeordnet wird,
   - Mittel zur Berechnung eines Schätzwerts der Folge der Symbole ($a(k)$) des komplexen Signals (650, 660, 800, 900, 950), die in der Lage sind, eine inverse Filterung des Filterungsrests zu erzeugen, und dann diese inverse Filterung auf die Symbolfolge ($c_m(k)$) anzuwenden (660), die der Impulsform minimaler Unterstützung zugeordnet ist, was zu einer Gesamtheit von modulierten Symbolfolgen ($a_m(k)$) führt.

2. Vorrichtung nach Anspruch 1, **dadurch gekennzeichnet, dass** die Funktionsbasis (501) parametriert ist, um mindestens zwei Tastproben je Periode (T) der Modulation aufzuweisen ($q\geq2$).

3. Vorrichtung nach Anspruch 2, **dadurch gekennzeichnet, dass** die Funktionsbasis (501) mindestens zwei Funktionen ($\varphi_1(t)$, $\varphi_b(t)$) aufweist, die voneinander durch eine gewählte Perioden-Zeitverschiebung abgeleitet werden ($T/2;T/q, q\geq2$).

4. Vorrichtung nach einem der Ansprüche 1 bis 3, **dadurch gekennzeichnet, dass** die Funktionsbasis (501) rechtwinklige Funktionen aufweist, die zeitlich aneinander angrenzen.

5. Vorrichtung nach einem der Ansprüche 1 bis 3, **dadurch gekennzeichnet, dass** die Funktionsbasis (501) Funktionen vom Typ "überhöhter Kosinus" aufweist.

6. Vorrichtung nach einem der Ansprüche 1 bis 5, **dadurch gekennzeichnet, dass** die Projektionsmittel (520) aufweisen:

   - Mittel (521), die ein digitales Filter definieren, das eine Impulsantwort im Wesentlichen gleich einer der Funktionen hat, wobei dieses digitale Filter das komplexe Signal empfängt, und
   - Mittel (523) zur wiederholten digitalen Abtastung des Ausgangs dieses Filters mit einer gewählten Taktfolge (2/T;q/T).

7. Vorrichtung nach einem der Ansprüche 1 bis 6, **dadurch gekennzeichnet, dass** die Funktionsbasis (501) von niederer Frequenz ist, wie das Spektrum des komplexen Signals nach der Demodulation.

8. Vorrichtung nach einem der Ansprüche 1 bis 7, **dadurch gekennzeichnet, dass** die Mittel (520, 620) zur Berechnung eines Schätzwerts der elementaren Impulsform des komplexen Signals Mittel zur Matrizenrechnung über die Komponenten des demodulierten komplexen Signals aufweisen.

9. Vorrichtung nach einem der vorhergehenden Ansprüche, **dadurch gekennzeichnet, dass** die Mittel (520, 620) zur Berechnung eines Schätzwerts der elementaren Impulsform des komplexen Signals ausgebildet sind, um eine Darstellung eines Unter-Raums minimaler Abmessung des Funktionsraums zu bestimmen, wobei der Unter-Raum das komplexe Signal enthält, und um in diesem Unter-Raum eine orthogonale Richtung zu jedem der Abschnitte des komplexen Signals zu ermitteln, wobei die Komponenten des dieser Richtung zugeordneten richtigen Vektors (V) für die Impulsform minimaler Unterstützung ($hpm(t)$) repräsentativ ist.

10. Vorrichtung nach einem der vorhergehenden Ansprüche, **dadurch gekennzeichnet, dass** die Mittel (520, 620) zur Berechnung eines Schätzwerts der elementaren Impulsform ausgebildet sind, um außerdem die Symbolfolge ($c_m(k)$) zu bestimmen, die der Impulsform minimaler Unterstützung zugeordnet ist.

11. Vorrichtung nach Anspruch 10, **dadurch gekennzeichnet, dass** die Mittel (520, 620) zur Berechnung eines Schätzwerts der elementaren Impulsform des komplexen Signals in der Lage sind, eine inverse Filterung der Impulsform minimaler Unterstützung zu erzeugen, und dann diese inverse Filterung auf die Komponenten des komplexen Signals in der Funktionsbasis anzuwenden, wodurch sich die Symbolfolge ($c_m(k)$) ergibt, die der Impulsform minimaler Unterstützung zugeordnet ist.

12. Vorrichtung nach einem der vorhergehenden Ansprüche, **dadurch gekennzeichnet, dass** die Mittel zur Berechnung eines Schätzwerts der Folge von Symbolen ($a(k)$) des komplexen Signals (650, 660) in der Lage sind, eine polynominale Auflösung (650) an der Folge von Symbolen ($c_m(k)$), die der Impulsform minimaler Unterstützung zugeordnet ist, mit Mitteln (659) durchzuführen, die den Filterungsrest ($\alpha i$) bestimmen.

13. Vorrichtung nach einem der vorhergehenden Ansprüche, **dadurch gekennzeichnet, dass** die Mittel zur Berechnung eines Schätzwerts der Folge von Symbolen ($a(k)$) des komplexen Signals (650, 660) außerdem in der Lage sind, eine Folge von Symbolen auszuwählen, die Zwängen entspricht, die aus der Gesamtheit der Folgen von modulierten Symbolen ($a_m(k)$) ausgewählt werden.

14. Vorrichtung nach Anspruch 13, **dadurch gekennzeichnet, dass** die gewählten Zwänge (659) die Dekorrelation der Symbole und die Minimierung der Varianz des Moduls der Symbole sind.

15. Vorrichtung nach einem der Ansprüche 10 bis 14, **dadurch gekennzeichnet, dass** die Verarbeitungsmittel Mittel zur Berechnung einer Trägerfrequenzkorrektur (700) aufweisen, die in der Lage sind, eine Korrektur ($\Delta f_o$) der ursprünglichen Schätzung ($f_a$) der Trägerfrequenz durch Suche nach einer Demodulationsfrequenz zu bestimmen, die zu einer Wahrscheinlichkeitsdichte mit minimaler Entropie führt.

16. Vorrichtung nach einem der Ansprüche 13 bis 15, **dadurch gekennzeichnet, dass** die Mittel zur Berechnung eines Schätzwerts der Folge von Symbolen in der Lage sind (800), eine Demodulation ($a(k)$) der ausgewählten Symbolfolge ($a_m(k)$) durch die Korrektur ($\Delta f_o$) der genäherten Schätzung der Trägerfrequenz zu erzeugen.

17. Vorrichtung nach Anspruch 16, **dadurch gekennzeichnet, dass** die Mittel zur Berechnung eines Schätzwerts der Folge von Symbolen außerdem in der Lage sind, die Gesamtheit der möglichen Zustände ($e_i$) der Symbole ($a(k)$)

zu schätzen (900, 950), die von der Demodulation der ausgewählten Symbolfolge stammen.

18. Vorrichtung nach Anspruch 17, **dadurch gekennzeichnet, dass** die Gesamtheit der möglichen Zustände (ei) der Symbole (a(k)), die von der Demodulation der gewählten Symbolfolge stammen, durch Ermittlung von lokalen Maxima der Wahrscheinlichkeitsdichte der Symbole erhalten wird.

19. Vorrichtung nach Anspruch 7, **dadurch gekennzeichnet, dass** die Mittel zur Berechnung eines Schätzwerts der Folge von Symbolen in der Lage sind, für jedes Symbol (a(k)), das aus der Demodulation der gewählten Symbolfolge einzeln gesehen stammt, den nächstliegenden möglichen Zustand unter der geschätzten Gesamtheit ($e_i$) der möglichen Zustände zu bestimmen (950), was eine Einheit von geschätzten Symbolen ({e(k)}) liefert.

20. Vorrichtung nach Anspruch 19, **dadurch gekennzeichnet, dass** sie Mittel (990) aufweist, um lokal ein Signal zu rekonstruieren, das die Trägerfrequenz (fo), die durch die elementare Impulsform (g(t)) definierte Modulation und die geschätzten Symbole ({e(k)}) hat, und um dieses lokale Signal mit dem ursprünglichen gespeicherten Signal zu vergleichen.

EP 1 172 980 B1

FIG.1

FIG.1A

FIG.1B

FIG.2A

FIG.2B

FIG.2C

exemple de constellation des symboles

partie imaginaire

partie réelle

FIG.2D

FIG. 3

FIG.4A

FIG.4B

FIG.4C

FIG.4D

fenêtre glissante
de largeur 2Δf

FIG.5A

FIG.5B

seuil

partie éliminée

FIG.5C

FIG.5D

z(t)

201 —
$$z(t) \cdot z^*(2-t)$$

x(t) →
311

202 — FFT entrelacée
MOYENNE DE PHASE

X(f)

203 — NORME
fa

204 — SEUILLAGE

205 — raie 1/T

**FIG.6**

206 — INTERPOLATION

1/T

**FIG.7A**

**FIG.7B**

Spectre

fréquence

$f_i$ $f_0$

**FIG.7C**

Spectre

fréquence

$f_0-f_i$

**FIG.7D**

fréquence

FIG.8A

FIG.8B

FIG.8C

FIG.10A

FIG.10B

FIG.10C

FIG.9

Fonction

$h_m(t)$

t

FIG.11

valeurs propres

0

1   2            $L_1 + L - 1$                    $2L_1$   numero des valeurs propres

$M_{L_1}$ rangées par ordre
décroissant

valeurs propres
considérées
comme nulle

valeurs propres

$L_1 + L - 1$

$L_1 + L$

$PL_1$   numéro des
valeurs propres

FIG.13

fonction hpm

résidu de filtrage (alpha (i))

FIG.14A

impulsion élémentaire gpm

FIG.14B

temps en nombre de T

FIG.14C

RF

AJUSTEMENT Q(Z) —651

RESOLUTION Q(Z) —653

$\beta_i$

$\{ ...\beta_i.. ; ...1/\beta_i^*... \}$ —655

$2^N$ tirages de N éléments —657

$a_m(k)$ de chaque tirage —658

Sélectionner Variance Mini. —659

FIG.15

symboles a(k) bruités

FIG.16

symboles modulés Am(k)

FIG.17

FIG.18

FIG.19

d(x,y)

901 — $k = 1$

903 — $e_k :: \max(d(x,y))$

905 — $d(x,y) = 0$
PRES DE $e_k$

907 — COND ?

NON

909
$k = k + 1$

OUI

FIN

FIG. 20

IDENTIF $a(k)$

951 — $k = 1$

953 — DIST. $[BAR(a(k)), e_i]$
$\forall i$

955 — $e_k ::: \min(a(k) - e_i)$

957 — $k = kx$ ?

NON

959
$k = k + 1$

OUI

FIN

FIG. 21